(19) **Europäisches Patentamt / European Patent Office / Office européen des brevets**

(11) **EP 4 708 726 A1**

(12) **EUROPEAN PATENT APPLICATION**
published in accordance with Art. 153(4) EPC

(43) Date of publication:
**11.03.2026 Bulletin 2026/11**

(21) Application number: **24831343.9**

(22) Date of filing: **15.03.2024**

(51) International Patent Classification (IPC):
**H04B 10/112** (2013.01)

(52) Cooperative Patent Classification (CPC):
**H04B 10/112**

(86) International application number:
**PCT/JP2024/010142**

(87) International publication number:
**WO 2025/004466 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.06.2023 PCT/JP2023/023687**

(71) Applicant: **MITSUBISHI ELECTRIC CORPORATION**
**Chiyoda-ku**
**Tokyo 100-8310 (JP)**

(72) Inventors:
• **ONO, Hitomi**
  **Tokyo 100-8310 (JP)**
• **HARAGUCHI, Eisuke**
  **Tokyo 100-8310 (JP)**
• **ANDO, Toshiyuki**
  **Tokyo 100-8310 (JP)**
• **ANADA, Takayasu**
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **SPATIAL OPTICAL COMMUNICATION TRANSCEIVER**

(57)     There are provided: a light source (1101) to generate a laser beam; an optical modulator (1102) to superimpose a communication signal on the laser beam generated by the light source (1101); an OHPA (1103) to amplify the laser beam superimposed by the optical modulator (1102); a collimator (1105) including a fiber connector (11051) and a collimator lens (11052) to convert the laser beam amplified by the OHPA (1103) into spatial light, and emit transmission light that is the spatial light; an optical telescope (1108) to enlarge a beam width of the transmission light emitted by the collimator (1105) and emit the transmission light to a spatial transmission path; a drive mechanism (1112) capable of adjusting a focal length of the collimator lens (11052); and a drive controller (1113) to determine a drive amount of the drive mechanism (1112) in such a manner that a product of a free space loss calculated from a distance between the spatial optical communication transceiver and a spatial optical communication transceiver (11) as a communication counterpart and a transmission gain determined by a beam spread angle of the transmission light is constant.

FIG. 1

**Description**

TECHNICAL FIELD

The present disclosure relates to a spatial optical communication transceiver that is mounted on a mobile object and transmits data.

BACKGROUND ART

In the spatial optical communication, a frequency of a carrier wave is very high such as terahertz or more, and a wide band can be ensured. Further, spatial optical communication has high spatial propagation directivity. For these reasons, spatial optical communication can be expected to be used for long-distance high-speed communication.

On the other hand, in a case of considering maintenance of a communication path over a wide range of distance variation from a short distance to a long distance in a spatial optical communication transceiver mounted on a mobile object, there is a possibility that a loss variation equal to or greater than a dynamic range of a light receiver such as a photoelectric converter or a capture tracking sensor in an optical demodulator occurs. Note that the dynamic range here represents a ratio between the minimum received light intensity and the saturation intensity.

A free space loss in a spatial transmission path of optical spatial communication varies with the square of the propagation distance. Thus, for example, in a case where the distance of the spatial transmission path varies by 20 dB from 100 km to 10,000 km, a dynamic range of 40 dB or more is necessary.

On the other hand, for example, in an apparatus disclosed in Patent Literature 1, by adjusting a spatial light attenuator on the reception side, the amount of incident light of a light receiving element is corrected, the light receiving sensitivity of the light receiving element is corrected, and the gain of an amplification circuit after light reception is changed. Thus, in this apparatus, a change in the amount of incident light in a wide range is corrected.

However, in this apparatus, the number of components on the receiver side increases, increasing complexity.

Further, in this apparatus, the adjustment range of the light amount depends on an attenuation rate that can be implemented by a variable attenuator. Thus, in this apparatus, a loss of an internal optical system on the receiver side increases in long-distance optical communication, and line establishment deteriorates.

Further, as a method for coping with the distance variation of the spatial transmission path, a method of electrically controlling a gain of an optical high power amplifier (OHPA) of the spatial optical communication transceiver is also conceivable. That is, a driving current or an injection current of excitation light of the OHPA is changed by an OHPA controller to control the gain of the OHPA.

However, in a high-gain OHPA, it is difficult to perform electrical control near a gain threshold value. In addition, when gain control is performed in the high gain direction, amplified spontaneous emission (ASE) is induced, the noise figure (NF) is deteriorated, and the S/N of the communication path fluctuates.

On the other hand, for example, in the apparatus disclosed in Patent Literature 2 or Patent Literature 3, by controlling the interval of a spatial optical system or the position of a condenser lens in an optical axis direction, the coupling efficiency of spatial light with respect to a fiber is changed, and the intensity of an optical signal is increased or decreased. Thus, in this apparatus, electrical control is not necessary in the OHPA, particularly in a fiber amplifier, and the output light intensity of the OHPA can be adjusted.

However, this apparatus is configured to couple the spatial light to the fiber again. Therefore, in this apparatus, there is a possibility that excess light when the output light intensity is adjusted is locally emitted to the outside of the fiber core and damages the fiber.

CITATION LIST

PATENT LITERATURES

Patent Literature 1: JP 2005-195806 A
Patent Literature 2: JP 2002-221675 A
Patent Literature 3: JP H06-037719 A

SUMMARY OF INVENTION

TECHNICAL PROBLEM

As described above, in a case where the variable attenuator on the receiver side is used in expanding the communicable distance of the spatial optical communication apparatus, the internal optical system loss increases and the line feasibility deteriorates. Further, in a case where the gain of the optical amplifier of the transmitter is electrically controlled in expanding a communicable distance of the spatial optical communication apparatus, it is difficult to electrically control the vicinity of the gain threshold value, and S/N fluctuation of the communication path occurs due to a change in noise characteristics when the gain is changed.

The present disclosure has been made to solve the above-described problems, and an object of the present disclosure is to provide a spatial optical communication transceiver capable of coping with a distance variation of a spatial transmission path without performing electrical gain variation.

SOLUTION TO PROBLEM

A spatial optical communication transceiver according to the present disclosure includes: a light source to generate a laser beam; an optical modulator to superimpose a communication signal on the laser beam generated by the light source; an optical amplifier to amplify the laser beam superimposed by the optical modulator; a collimator including a fiber connector and a collimator lens to convert the laser beam amplified by the optical amplifier into spatial light, and emit transmission light that is the spatial light; an optical telescope to enlarge a beam width of the transmission light emitted by the collimator and emit the transmission light to a spatial transmission path; a drive mechanism capable of adjusting a focal length of the collimator lens; and a drive controller to determine a drive amount of the drive mechanism in such a manner that a product of a free space loss calculated from a distance between the spatial optical communication transceiver and a spatial optical communication transceiver as a communication counterpart and a transmission gain determined by a beam spread angle of the transmission light is constant.

ADVANTAGEOUS EFFECTS OF INVENTION

According to the present disclosure, with the above configuration, it is possible to cope with distance variation of a spatial transmission path without performing electrical gain variation.

BRIEF DESCRIPTION OF DRAWINGS

FIG. 1 is a diagram illustrating a configuration example of a spatial optical communication system according to a first embodiment.
FIGS. 2A and 2B are diagrams for describing an outline of variation of a beam spread angle of transmission light by adjustment of a focal length of a collimator lens in the first embodiment, FIG. 2A being a diagram illustrating an example of a case where position adjustment of the collimator lens is not performed, and FIG. 2B being a diagram illustrating an example of a case where position adjustment of the collimator lens is performed.
FIG. 3 is a diagram illustrating a configuration example of a collimator according to the first embodiment in a case where the collimator lens is moved.
FIG. 4 is a diagram illustrating a configuration example of the collimator according to the first embodiment in a case where an end of a fiber connector is moved.
FIG. 5 is a diagram illustrating a configuration example of a collimator according to the first embodiment in a case where an electro-optical material is used for a collimator lens portion.

FIG. 6 is a diagram illustrating a configuration example of a spatial optical communication system according to a second embodiment.
FIG. 7 is a diagram illustrating a configuration example of a spatial optical communication system according to a third embodiment.
FIG. 8 is a diagram illustrating an example of an angular error with respect to a relative distance between spatial optical communication transceivers.
FIGS. 9A to 9C are diagrams illustrating an example of a state in which an error range is scanned in a spiral manner with transmission light.
FIG. 10 is a flowchart illustrating an operation example at a time of initial capture by one spatial optical communication transceiver in the spatial optical communication system according to the third embodiment.
FIG. 11 is a flowchart illustrating an operation example at a time of initial capture by the other spatial optical communication transceiver in the spatial optical communication system according to the third embodiment.
FIGS. 12A and 12B are diagrams illustrating a hardware configuration example of the spatial optical communication transceivers according to the first to third embodiments.

DESCRIPTION OF EMBODIMENTS

Hereinafter, embodiments will be described in detail with reference to the drawings.

First Embodiment

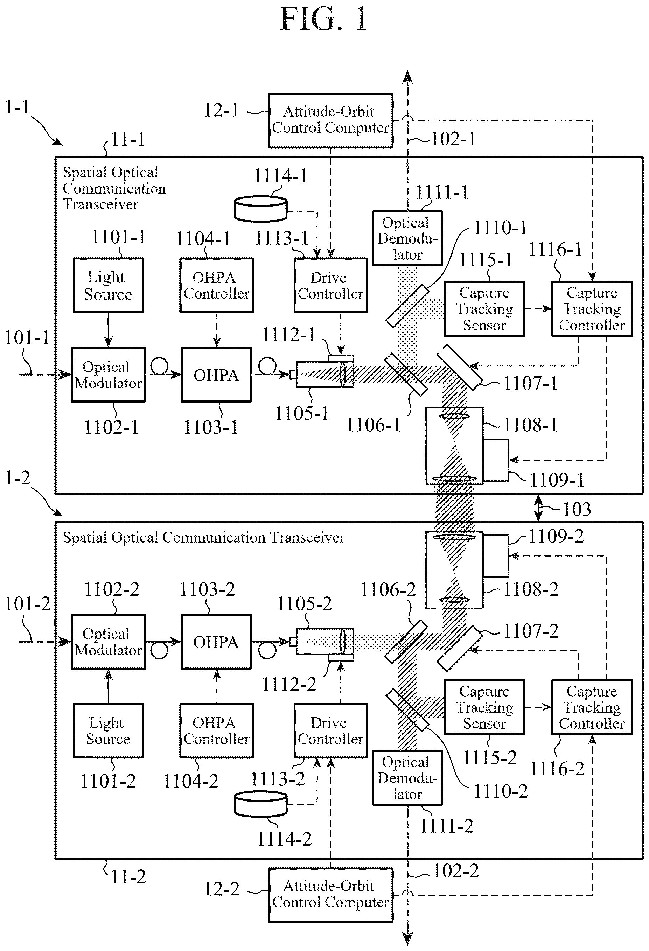

FIG. 1 is a diagram illustrating a configuration example of a spatial optical communication system according to a first embodiment.
As illustrated in FIG. 1, the spatial optical communication system includes a spatial optical communication apparatus 1-1 and a spatial optical communication apparatus 1-2. In this spatial optical communication system, bidirectional communication is performed between the spatial optical communication apparatus 1-1 and the spatial optical communication apparatus 1-2.
Note that, here, in a case where it is necessary to distinguish systems for configurations of the spatial optical communication apparatus 1 and the spatial optical communication apparatus 1, a suffix (-1 or -2) is added to the reference numeral.
The spatial optical communication apparatus 1-1 is mounted on a mobile object and communicates with the spatial optical communication apparatus 1-2 as a communication counterpart. Note that the spatial optical communication apparatus 1-1 according to the first embodiment has a function of making the light intensity of transmission light received by the spatial optical communication apparatus 1-2 as a communication counterpart constant and establishing a stable spatial optical communication path even when the distance of the spatial transmission path varies.

As illustrated in FIG. 1, the spatial optical communication apparatus 1-1 includes a spatial optical communication transceiver 11-1 and an attitude-orbit control computer 12-1.

As illustrated in FIG. 1, the spatial optical communication transceiver 11-1 includes a light source 1101-1, an optical modulator 1102-1, an OHPA 1103-1, an OHPA controller 1104-1, a collimator 1105-1, a dichroic mirror 1106-1, a tip-tilt mirror 1107-1, an optical telescope 1108-1, a gimbal 1109-1, a beam splitter 1110-1, an optical demodulator 1111-1, a drive mechanism 1112-1, a drive controller 1113-1, a storage device 1114-1, a capture tracking sensor 1115-1, and a capture tracking controller 1116-1.

The light source 1101-1 generates a laser beam that is a carrier wave to be spatially propagated. The laser beam generated by the light source 1101-1 is output to the optical modulator 1102-1.

Note that the light source 1101-1 is, for example, a laser diode (LD).

The optical modulator 1102-1 superimposes transmission data 101-1 on the laser beam generated by the light source 1101-1. Note that the transmission data 101-1 is a communication signal input from the outside of the spatial optical communication transceiver 11-1. The laser beam after being superimposed by the optical modulator 1102-1 is output to the OHPA 1103-1.

Note that examples of a method of optical modulation by the optical modulator 1102-1 include on-off keying (OOK) by optical intensity modulation, phase shift keying (PSK) by optical phase modulation, and the like, and can be appropriately selected.

The OHPA 1103-1 is an optical amplifier in which a fiber is input and output. The OHPA 1103-1 amplifies the light intensity of the laser beam superimposed by the optical modulator 1102-1. The laser beam amplified by the OHPA 1103-1 is output to the collimator 1105-1.

Examples of the OHPA 1103-1 include a fiber amplifier such as an erbium doped fiber amplifier (EDFA) and a semiconductor optical amplifier (SOA). In the fiber amplifier, excitation light is injected into a fiber to amplify signal light. Further, in the semiconductor optical amplifier, signal light is amplified by current injection.

The OHPA controller 1104-1 is an optical amplifier controller that performs gain control of the OHPA 1103-1. That is, when the OHPA 1103-1 is a fiber amplifier, the OHPA controller 1104-1 performs gain control of the fiber amplifier by controlling the excitation light of the fiber amplifier. Further, when the OHPA 1103-1 is a semiconductor optical amplifier, the OHPA controller 1104-1 performs gain control of the semiconductor optical amplifier by controlling the injection current of the semiconductor optical amplifier.

The collimator 1105-1 converts the laser beam amplified by the OHPA 1103-1 into spatial light close to parallel light, and emits transmission light that is the spatial light. Transmission light emitted by the collimator 1105-1 is output to the optical telescope 1108-1 via the dichroic mirror 1106-1 and the tip-tilt mirror 1107-1.

The collimator 1105-1 is usually configured by a fiber connector 11051-1 and a collimator lens 11052-1. Then, in the collimator 1105-1, the distance between an end of the fiber connector 11051-1 and the collimator lens 11052-1 is set as the focal length of the collimator lens 11052-1, so that the output light from the collimator lens 11052-1 becomes parallel light, that is, collimated light.

The dichroic mirror 1106-1 wavelength-separates the transmission light emitted by the collimator 1105-1 and reception light reflected by the tip-tilt mirror 1107-1. That is, the dichroic mirror 1106-1 transmits the transmission light emitted by the collimator 1105-1 and reflects reception light reflected by the tip-tilt mirror 1107-1. The transmission light transmitted through the dichroic mirror 1106-1 is output to the tip-tilt mirror 1107-1, and the reception light reflected by the dichroic mirror 1106-1 is output to the beam splitter 1110-1.

The tip-tilt mirror 1107-1 is a mirror capable of adjusting the angle in biaxial directions of the transmission light and the reception light.

Then, the tip-tilt mirror 1107-1 reflects the transmission light transmitted through the dichroic mirror 1106-1, and reflects the reception light received by the optical telescope 1108-1. The transmission light reflected by the tip-tilt mirror 1107-1 is output to the optical telescope 1108-1, and the reception light reflected by the optical telescope 1108-1 is output to the dichroic mirror 1106-1.

The tip-tilt mirror 1107-1 controls both the angles of the transmission light and the reception light with the same mirror. On the other hand, in a case where the distance between the spatial optical communication transceivers 11 is long, in addition to the tip-tilt mirror 1107-1, a tip-tilt mirror that independently performs angle control of only transmission light may be added. In a case where the distance of the spatial transmission path is long, the spatial optical communication apparatus 1-2 as a communication counterpart mounted on the mobile object moves while light propagates through the spatial transmission path. Therefore, when the orientation direction of the communication counterpart is specified on the basis of the reception light from the communication counterpart and the orientation of the transmission light is controlled, an orientation error corresponding to the movement of the mobile object during the time when the light travels back and forth in the spatial transmission path occurs. This is called aberration. In order to correct this aberration, it is sufficient if a tip-tilt mirror for optical difference correction is added between the dichroic mirror 1106-1 and the collimator 1105-1.

The optical telescope 1108-1 enlarges the beam width of the transmission light reflected by the tip-tilt mirror 1107-1 and radiates the transmission light to the spatial transmission path. Further, the optical telescope 1108-1 receives, as reception light, transmission light emitted by an optical telescope 1108-2 in an opposing spatial optical communication transceiver 11-2.

The gimbal 1109-1 is a device capable of adjusting the optical axis direction of the optical telescope 1108-1.

The beam splitter 1110-1 bifurcates the reception light reflected by the dichroic mirror 1106-1. One beam of the reception light obtained by the beam splitter 1110-1 is output to the optical demodulator 1111-1, and the other beam of the reception light is output to the capture tracking sensor 1115-1.

The optical demodulator 1111-1 photoelectrically converts the one beam of the reception light obtained by the beam splitter 1110-1 and demodulates a communication signal. The communication signal demodulated by the optical demodulator 1111-1 is output to the outside as received data 102-1.

The drive mechanism 1112-1 drives the collimator lens 11052-1 included in the collimator 1105-1. Then, the drive mechanism 1112-1 drives the collimator lens 11052-1 to adjust the optical axis direction of the collimator lens 11052-1 and adjust the focal length of the collimator lens 11052-1.

The drive controller 1113-1 performs drive control of the drive mechanism 1112-1 on the basis of the distance between the mobile objects predicted by the attitude-orbit control computer 12-1 and the information stored in the storage device 1114-1. At this time, the drive controller 1113-1 determines the drive amount of the drive mechanism 1112-1 in such a manner that, on the basis of the distance between the mobile objects predicted by the attitude-orbit control computer 12-1, the product of a free space loss calculated from the distance and a transmission gain determined by a beam spread angle of the transmission light becomes constant.

The storage device 1114-1 is a setting table that stores information indicating the relationship between a lens drive amount of the drive mechanism 1112-1 and a beam spread angle of transmission light emitted from the optical telescope 1108-1 to the spatial transmission path.

Examples of the storage device 1114-1 include a nonvolatile or volatile semiconductor memory such as a random access memory (RAM), a read only memory (ROM), a flash memory, an erasable programmable ROM (EPROM), or an electrically EPROM (EEPROM), a magnetic disk, a flexible disk, an optical disk, a compact disk, a mini disk, a digital versatile disc (DVD), or the like.

Note that FIG. 1 illustrates a case where the storage device 1114-1 is provided inside the spatial optical communication transceiver 11-1. However, it is not limited thereto, and the storage device 1114-1 may be provided outside the spatial optical communication transceiver 11-1.

The capture tracking sensor 1115-1 detects the arrival angle of the reception light on the basis of the other beam of the reception light obtained by the beam splitter 1110-1. Information indicating the arrival angle of the reception light detected by the capture tracking sensor 1115-1 is output to the capture tracking controller 1116-1.

The capture tracking controller 1116-1 controls the gimbal 1109-1 and the tip-tilt mirror 1107-1 on the basis of the expected angle predicted by the attitude-orbit control computer 12-1 and the arrival angle of the reception light detected by the capture tracking sensor 1115-1. That is, the capture tracking controller 1116-1 controls the angle of the gimbal 1109-1 and the angle of the tip-tilt mirror 1107-1 to align the optical axis of the optical telescope 1108-1 with the optical axis of the optical telescope 1108-2 in the spatial optical communication transceiver 11-2 that communicates with the spatial optical communication transceiver 11-1.

The attitude-orbit control computer 12-1 predicts an expected angle and predicts a distance between mobile objects that perform communication on the basis of attitude and position information of the mobile object on which the spatial optical communication apparatus 1-1 is mounted and position information of the mobile object on which the spatial optical communication apparatus 1-2 is mounted. The expected angle is a relative direction of the spatial optical communication transceiver 11-2 with respect to the spatial optical communication transceiver 11-1. Further, the distance between mobile objects that perform communication is a distance between the spatial optical communication transceiver 11-1 and the spatial optical communication transceiver 11-2. Information indicating the expected angle predicted by the attitude-orbit control computer 12-1 is output to the capture tracking controller 1116-1. Further, information indicating the distance between the mobile objects that perform communication predicted by the attitude-orbit control computer 12-1 is output to the drive controller 1113-1.

The spatial optical communication apparatus 1-2 is mounted on a mobile object and communicates with the spatial optical communication apparatus 1-1 as a communication counterpart. Note that the spatial optical communication apparatus 1-2 according to the first embodiment has a function of making the light intensity of transmission light received by the spatial optical communication apparatus 1-1 as a communication counterpart constant and establishing a stable spatial optical communication path even in a case where the distance of the spatial transmission path varies.

As illustrated in FIG. 1, the spatial optical communication apparatus 1-2 includes a spatial optical communication transceiver 11-2 and an attitude-orbit control computer 12-2.

As illustrated in FIG. 1, the spatial optical communication transceiver 11-2 includes a light source 1101-2, an optical modulator 1102-2, an OHPA 1103-2, an OHPA controller 1104-2, a collimator 1105-2, a dichroic mirror 1106-2, a tip-tilt mirror 1107-2, an optical telescope 1108-2, a gimbal 1109-2, a beam splitter 1110-2, an optical demodulator 1111-2, a drive mechanism 1112-2, a drive controller 1113-2, a storage device 1114-2, a capture tracking sensor 1115-2, and a capture tracking controller 1116-2.

The light source 1101-2 generates a laser beam that is a carrier wave to be spatially propagated. The laser beam generated by the light source 1101-2 is output to the optical modulator 1102-2.

Note that the light source 1101-2 is, for example, an LD.

The optical modulator 1102-2 superimposes transmission data 101-2 on the laser beam generated by the light source 1101-2. Note that the transmission data 101-2 is a communication signal input from the outside of the spatial optical communication transceiver 11-2. The laser beam after being superimposed by the optical modulator 1102-2 is output to the OHPA 1103-2.

Note that examples of the method of light modulation by the optical modulator 1102-2 include OOK by light intensity modulation, PSK by light phase modulation, and the like, and can be appropriately selected.

The OHPA 1103-2 is an optical amplifier in which a fiber is input and output. The OHPA 1103-2 amplifies the light intensity of the laser beam superimposed by the optical modulator 1102-1. The laser beam amplified by the OHPA 1103-2 is output to the collimator 1105-2.

Examples of the OHPA 1103-2 include a fiber amplifier such as an erbium doped fiber amplifier (EDFA) and a semiconductor optical amplifier (SOA). In the fiber amplifier, excitation light is injected into a fiber to amplify signal light. Further, in the semiconductor optical amplifier, signal light is amplified by current injection.

The OHPA controller 1104-2 is an optical amplifier controller that performs gain control of the OHPA 1103-2. That is, when the OHPA 1103-2 is a fiber amplifier, the OHPA controller 1104-2 performs gain control of the fiber amplifier by controlling the excitation light of the fiber amplifier. Further, when the OHPA 1103-2 is a semiconductor optical amplifier, the OHPA controller 1104-2 performs gain control of the semiconductor optical amplifier by controlling the injection current of the semiconductor optical amplifier.

The collimator 1105-2 converts the laser beam amplified by the OHPA 1103-2 into spatial light close to parallel light, and emits transmission light that is the spatial light. The transmission light emitted by the collimator 1105-2 is output to the optical telescope 1108-2 via the dichroic mirror 1106-2 and the tip-tilt mirror 1107-2.

The collimator 1105-2 is usually configured by a fiber connector 11051-2 and a collimator lens 11052-2. Then, in the collimator 1105-2, the distance between an end of the fiber connector 11051-2 and the collimator lens 11052-2 is set as the focal length of the collimator lens 11052-2, so that the output light from the collimator lens 11052-2 becomes parallel light, that is, collimated light.

The dichroic mirror 1106-2 wavelength-separates the transmission light emitted by the collimator 1105-2 and the reception light reflected by the tip-tilt mirror 1107-2. That is, the dichroic mirror 1106-2 transmits the transmission light emitted by the collimator 1105-2 and reflects the reception light reflected by the tip-tilt mirror 1107-2. The transmission light transmitted through the dichroic mirror 1106-2 is output to the tip-tilt mirror 1107-2, and the reception light reflected by the dichroic mirror 1106-2 is output to the beam splitter 1110-2.

The tip-tilt mirror 1107-2 is a mirror capable of adjusting the angle in biaxial directions of the transmission light and the reception light.

Then, the tip-tilt mirror 1107-2 reflects the transmission light transmitted through the dichroic mirror 1106-2, and reflects the reception light received by the optical telescope 1108-2. The transmission light reflected by the tip-tilt mirror 1107-2 is output to the optical telescope 1108-2, and the reception light reflected by the optical telescope 1108-2 is output to the dichroic mirror 1106-2.

The tip-tilt mirror 1107-2 controls both the angles of the transmission light and the reception light with the same mirror. On the other hand, in a case where the distance between the spatial optical communication transceivers 11 is long, in addition to the tip-tilt mirror 1107-2, a tip-tilt mirror that independently performs angle control of only transmission light may be separately added. In a case where the distance of the spatial transmission path is long, the spatial optical communication apparatus 1-1 as a communication counterpart mounted on the mobile object moves while light propagates through the spatial transmission path. Therefore, when the orientation direction of the communication counterpart is specified on the basis of the reception light from the communication counterpart and the orientation of the transmission light is controlled, an orientation error corresponding to the movement of the mobile object during the time when the light travels back and forth in the spatial transmission path occurs. This is called aberration. In order to correct this aberration, it is sufficient if a tip-tilt mirror for optical difference correction is added between the dichroic mirror 1106-2 and the collimator 1105-2.

The optical telescope 1108-2 enlarges the beam width of the transmission light reflected by the tip-tilt mirror 1107-2 and radiates the transmission light to the spatial transmission path. Further, the optical telescope 1108-2 receives, as reception light, transmission light emitted by the optical telescope 1108-1 in the opposing spatial optical communication transceiver 11-1.

The gimbal 1109-2 is a device capable of adjusting the optical axis direction of the optical telescope 1108-2.

The beam splitter 1110-2 bifurcates the reception light reflected by the dichroic mirror 1106-2. One beam of the reception light obtained by the beam splitter 1110-2 is output to the optical demodulator 1111-2, and the other beam of the reception light is output to the capture tracking sensor 1115-2.

The optical demodulator 1111-2 photoelectrically converts the one beam of the reception light obtained by the beam splitter 1110-2 and demodulates a communication signal. The communication signal demodulated by the optical demodulator 1111-2 is output to the outside as received data 102-2.

The drive mechanism 1112-2 drives the collimator lens 11052-2 included in the collimator 1105-2. Then, the drive mechanism 1112-2 drives the collimator lens 11052-2 to adjust the optical axis direction of the collimator lens 11052-2 and adjust the focal length of the collimator lens 11052-2.

The drive controller 1113-2 performs drive control of the drive mechanism 1112-2 on the basis of the distance between the mobile objects predicted by the attitude-orbit control computer 12-2 and the information stored in the storage device 1114-2. At this time, the drive controller 1113-2 determines the drive amount of the drive mechanism 1112-2 in such a manner that the product of a free space loss calculated from the distance and a transmission gain determined by a beam spread angle of the transmission light becomes constant on the basis of the distance between the mobile objects predicted by the attitude-orbit control computer 12-2.

The storage device 1114-2 is a setting table that stores information indicating the relationship between the lens drive amount of the drive mechanism 1112-2 and the beam spread angle of transmission light emitted from the optical telescope 1108-2 to the spatial transmission path.

The storage device 1114-2 corresponds to, for example, a nonvolatile or volatile semiconductor memory such as RAM, ROM, a flash memory, EPROM, or EEPROM, a magnetic disk, a flexible disk, an optical disk, a compact disk, a mini disk, or DVD.

Note that FIG. 1 illustrates a case where the storage device 1114-2 is provided inside the spatial optical communication transceiver 11-2. However, it is not limited thereto, and the storage device 1114-2 may be provided outside the spatial optical communication transceiver 11-2.

The capture tracking sensor 1115-2 detects the arrival angle of the reception light on the basis of the other beam of the reception light obtained by the beam splitter 1110-2. Information indicating the arrival angle of the reception light detected by the capture tracking sensor 1115-2 is output to the capture tracking controller 1116-2.

The capture tracking controller 1116-2 controls the gimbal 1109-2 and the tip-tilt mirror 1107-2 on the basis of the expected angle predicted by the attitude-orbit control computer 12-2 and the arrival angle of the reception light detected by the capture tracking sensor 1115-2. That is, the capture tracking controller 1116-2 controls the angle of the gimbal 1109-2 and the angle of the tip-tilt mirror 1107-2 to align the optical axis of the optical telescope 1108-2 with the optical axis of the optical telescope 1108-1 in the spatial optical communication transceiver 11-1 that communicates with the spatial optical communication transceiver 11-2.

The attitude-orbit control computer 12-2 predicts an expected angle and predicts a distance between mobile objects that perform communication on the basis of attitude and position information of the mobile object on which the spatial optical communication apparatus 1-2 is mounted and position information of the mobile object on which the spatial optical communication apparatus 1-1 is mounted. The expected angle is a relative direction of the spatial optical communication transceiver 11-1 with respect to the spatial optical communication transceiver 11-2. Further, the distance between mobile objects that perform communication is a distance between the spatial optical communication transceiver 11-1 and the spatial optical communication transceiver 11-2. Information indicating the expected angle predicted by the attitude-orbit control computer 12-2 is output to the capture tracking controller 1116-2. Further, information indicating the distance between the mobile objects that perform communication predicted by the attitude-orbit control computer 12-2 is output to the drive controller 1113-2.

Note that the spatial transmission path is a medium that fills between the spatial optical communication transceiver 11-1 and the spatial optical communication transceiver 11-2, and the medium may be any medium, for example, the atmosphere in the case of communication on the earth, seawater in the case of underwater communication, or vacuum in the case of inter-satellite communication.

In FIG. 1, reference numeral 103 denotes a distance between mobile objects that perform communication, that is, a distance of a spatial transmission path.

Next, an operation example of the spatial optical communication system according to the first embodiment illustrated in FIG. 1 will be described.

In this spatial optical communication system, data is transmitted from the spatial optical communication apparatus 1-1 to the spatial optical communication apparatus 1-2, and data is transmitted from the spatial optical communication apparatus 1-2 to the spatial optical communication apparatus 1-1. Here, the wavelength of transmission light from the spatial optical communication apparatus 1-1 to the spatial optical communication apparatus 1-2 is $\lambda a$, and the wavelength of transmission light from the spatial optical communication apparatus 1-2 to the spatial optical communication apparatus 1-1 is $\lambda b$.

Further, since the spatial optical communication apparatus 1-1 and the spatial optical communication apparatus 1-2 operate similarly, a case where data is transmitted from the spatial optical communication apparatus 1-1 to the spatial optical communication apparatus 1-2 will be described below as an example.

First, output light of the light source 1101-1 in the spatial optical communication transceiver 11-1 is input to the optical modulator 1102-1, and the transmission data 101-1, which is a communication signal input from the outside of the spatial optical communication transceiver 11-1, is superimposed by the optical modulator 1102-1.

The output light of the optical modulator 1102-1 is input to the OHPA 1103-1, and the optical intensity is amplified by the OHPA 1103-1.

Note that the OHPA controller 1104-1 performs gain control of the OHPA 1103-1.

The output light of the OHPA 1103-1 is converted into spatial light by the collimator 1105-1 and emitted as transmission light.

The output light of the collimator 1105-1 passes through the dichroic mirror 1106-1, is reflected by the tip-tilt mirror 1107-1, and is incident on the optical telescope 1108-1.

Note that the dichroic mirror 1106-1 separates transmission light of the spatial optical communication transceiver 11-1 and reception light from the spatial optical communication transceiver 11-2, that is, transmits a wavelength of λa and reflects a wavelength of λb. Thus, the transmission light from the spatial optical communication transceiver 11-2 is reflected by the dichroic mirror 1106-1 and is not incident on the collimator 1105-1 side.

The output light of the optical telescope 1108-1 propagates through the spatial transmission path, and is received as reception light by the optical telescope 1108-2 of the spatial optical communication transceiver 11-2.

The reception light received by the optical telescope 1108-2 is reflected by the tip-tilt mirror 1107-2, reflected by the dichroic mirror 1106-2, then bifurcated by the beam splitter 1110-2, and input to the capture tracking sensor 1115-2 and the optical demodulator 1111-2.

Thereafter, in the optical demodulator 1111-2, the reception light is photoelectrically converted by an internal photoelectric converter, and the communication signal is demodulated. The communication signal demodulated by the optical demodulator 1111-2 is output to the outside as received data 102-2.

Further, in order to ensure a communication path with the spatial optical communication transceiver 11-2, the spatial optical communication transceiver 11-1 implements the communication path by using the capture tracking sensor 1115-1 to detect the arrival direction of the reception light, and the capture tracking controller 1116-1 controls the tip-tilt mirror 1107-1 and the gimbal 1109-1 on the basis of the information.

At this time, the attitude-orbit control computer 12-1 predicts an expected angle, which is a relative direction of the spatial optical communication transceiver 11-2 with respect to the spatial optical communication transceiver 11-1, on the basis of the attitude and position of the mobile object on which the spatial optical communication transceiver 11-1 is mounted and the position of the mobile object on which the spatial optical communication transceiver 11-2 is mounted. Then, the capture tracking controller 1116-1 determines the orientation angle of the gimbal 1109-1 on the basis of the information and the arrival direction of the reception light, and suppresses the angular error within a range that can be corrected by the tip-tilt mirror 1107-1.

Note that, in the above description, an operation example in a case where data transmission is performed from the spatial optical communication apparatus 1-1 to the spatial optical communication apparatus 1-2 has been described. On the other hand, in a case where data transmission is performed from the spatial optical communication apparatus 1-2 to the spatial optical communication apparatus 1-1, an operation similar to the above is performed.

Thus, in the spatial optical communication system, the optical axis of the optical telescope 1108-1 and the optical axis of the optical telescope 1108-2 face right each other, and by continuing the angle control by the capture tracking controller 1116-1 and the angle control by the capture tracking controller 1116-2, the tracking of the mobile objects is implemented and the optical path is maintained.

The basic operations of the spatial optical communication apparatus 1-1 and the spatial optical communication apparatus 1-2 have been described above.

On the other hand, when considering the maintenance of the communication path in a case where there is a wide distance variation from a short distance to a long distance, there is a possibility that a loss variation equal to or greater than the dynamic range of the photoelectric converter in the optical demodulator 1111-1 or the light receiver such as the capture tracking sensor 1115-1 occurs. Here, the dynamic range represents a ratio between the minimum received light intensity and the saturation intensity.

In general, $G_{fs}$, which is a free space loss of light, is expressed by the following Expression (1).

In Expression (1), λ represents the wavelength of the propagating light, and L represents the propagation distance. As in Expression (1), the free space loss varies with the square of the propagation distance. Therefore, for example, when the distance of the spatial transmission path varies by 20 dB from 100 km to 10,000 km, a dynamic range of 40 dB or more is necessary.

$$G_{fs} = \left(\frac{\lambda}{4\pi L}\right)^2 \qquad (1)$$

Further, as a method for coping with the distance variation of the spatial transmission path, it is conceivable to electrically control the gain of the OHPA 1103-1. That is, the driving current or the injection current of the excitation light of the OHPA 1103-1 can be changed by the OHPA controller 1104-1 to control the gain of the OHPA 1103-1.

However, in the high gain OHPA 1103-1, it is difficult to electrically control at the vicinity of a gain threshold value when the gain is decreased. Further, when gain control is performed in the high gain direction, ASE is induced to degrade NF, and the S/N of the communication path fluctuates.

Accordingly, in the first embodiment, the spatial optical communication transceiver 11-1 capable of coping with the distance variation of the spatial transmission path, which is not based on the electrical gain variable of the OHPA 1103-1, such as a change of the current value of the OHPA controller 1104-1, is implemented.

That is, in the spatial optical communication transceiver 11-1 according to the first embodiment, the beam spread angle of the transmission light emitted from the optical telescope 1108-1 is controlled by controlling the beam spread angle of the transmission light emitted from the collimator 1105-1.

In the collimator 1105-1, generally, the distance between the end of the fiber connector 11051-1 and the collimator lens 11052-1 is fixed in such a manner that the emitted light becomes parallel light, and a focal length of the collimator lens 11052-1 is fixed. On the other hand, in the spatial optical communication transceiver 11-1 according to the first embodiment, the drive mechanism 1112-1 changes the focal length of the collimator lens 11052-1.

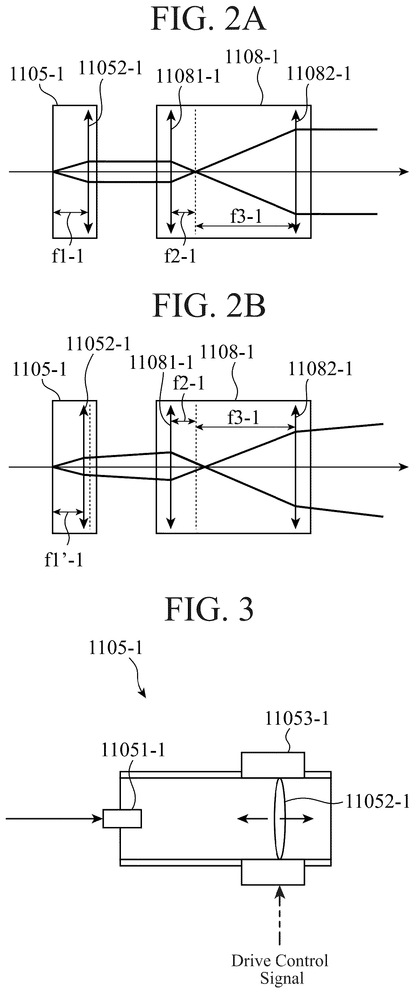

An outline of variation of the beam spread angle of the transmission light by adjusting the focal length of the collimator lens 11052-1 will be described with reference to FIG. 2.

The example of FIG. 2 illustrates a case where the collimator 1105-1 is a refractive collimator having a collimator lens 11052-1, and the optical telescope 1108-1 is a refractive optical telescope having a collimator side lens 11081-1 and a spatial transmission path side lens 11082-1.

Further, it is assumed that the focal length of the collimator lens 11052-1 is f1-1, the focal length of the collimator side lens 11081-1 is f2-1, and the focal length of the spatial transmission path side lens 11082-1 is f3-1.

When the collimator lens 11052-1 illustrated in FIG. 2A is not adjusted, the distance between the collimator lens 11052-1 and the end of the fiber connector 11051-1 is f1-1, and the emitted light of the collimator 1105-1 becomes parallel light. The light is enlarged by the optical telescope 1108-1 which is an afocal optical system, and is emitted from the optical telescope 1108-1 as transmission light. Therefore, the transmission light becomes substantially parallel light, and when the transmission light is propagated for a long distance, the transmission light diffractionally spreads according to the beam width determined by the opening diameter on the spatial transmission path side of the optical telescope 1108-1.

On the other hand, as illustrated in FIG. 2B, when the collimator lens 11052-1 is brought close to the end of the fiber connector 11051-1, the emitted light of the collimator 1105-1 is not parallel light but spreads. Thus, in the optical telescope 1108-1, the afocal imaging system collapses, and the transmission light becomes a beam that is wider than that in the case of FIG. 2A. FIG. 2B illustrates a case where the distance between the collimator lens 11052-1 and the end of the fiber connector 11051-1 is f1'-1.

Note that, in the above description, a case where the collimator 1105-1 is a refractive type collimator and the optical telescope 1108-1 is a refractive type optical telescope has been described as an example, but a similar optical effect can be obtained in a configuration using a reflecting mirror.

Examples of a method of adjusting the focal length of the collimator 1105-1 include the following methods.

First, for example, as illustrated in FIG. 3, there is a method of moving the collimator lens 11052-1.

In this case, for example, the collimator lens 11052-1 is fixed to the collimator 1105-1, and the linear motion actuator 11053-1 capable of moving the collimator lens 11052-1 along the optical axis is provided. Then, the drive mechanism 1112-1 adjusts the focal length of the collimator 1105-1 by driving the linear motion actuator 11053-1 by a drive control signal.

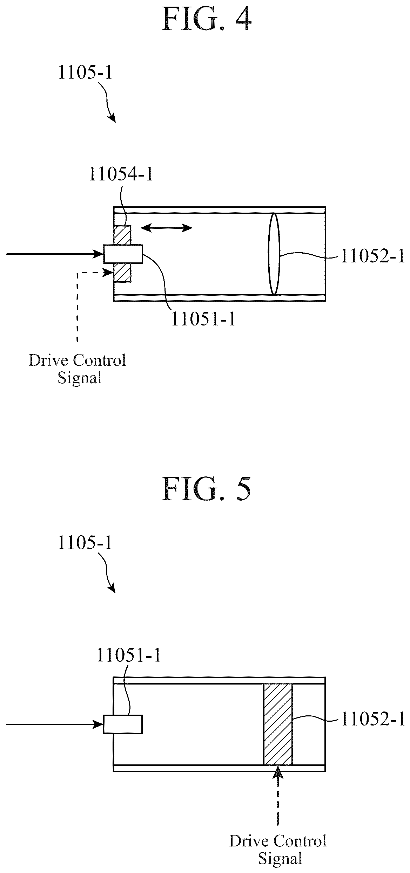

Further, for example, as illustrated in FIG. 4, there is a method of moving the end of the fiber connector 11051-1.

In this case, for example, the fiber connector 11051-1 is fixed to the collimator 1105-1, and a cylindrical piezoelectric element 11054-1 that can move the end of the fiber connector 11051-1 along the optical axis direction is provided. Then, the drive mechanism 1112-1 drives the piezoelectric element 11054-1 by the drive control signal, and adjusts the focal length of the collimator 1105-1 by controlling the position of the fiber connector 11051-1 by expansion and contraction of the piezoelectric element 11054-1.

In this case, as compared with the case of FIG. 3, as the configuration of the collimator 1105-1, it is possible to perform precise driving without using a mechanical driving portion.

Further, for example, as illustrated in FIG. 5, there is a method of using a lens whose focal length changes when a voltage is applied as the collimator lens 11052-1.

In this case, for example, an electro-optic material is used for the collimator lens 11052-1. Then, the drive mechanism 1112-1 adjusts the focal length of the collimator 1105-1 by controlling the lens power due to the electro-optical effect of the collimator lens 11052-1 by the drive control signal.

In this case, as compared with the case of FIG. 3, as the configuration of the collimator 1105-1, it is possible to perform precise driving without using a mechanical driving portion.

Further, the attitude-orbit control computer 12-1 can predict the distance between the spatial optical communication transceiver 11-1 and the spatial optical communication transceiver 11-2, and as a result, the spatial optical communication apparatus 1-1 can predict the free space loss.

Note that, as a method by which the attitude-orbit control computer 12-1 calculates the distance of the spatial transmission path from each of the position of the mobile object on which the spatial optical communication apparatus 1-1 is mounted and the position of the mobile object on which the spatial optical communication apparatus 1-2 is mounted, for example, a method of acquiring two-line elements (TLE) from a ground station by another communication means if the mobile object is a satellite and performing orbit calculation based on the TLE can be considered. Alternatively, a method of calculating the distance of the spatial transmission path using laser distance measurement or direct distance measurement by microwaves may be adopted.

Here, Gt, which is the transmission gain when the beam spread angle of the output light of the optical telescope 1108-1 is $\theta_t$, is expressed by the following Expression (2). Therefore, the transmission gain is deteriorated by the square of the beam spread angle.

$$G_t = \left(\frac{\pi}{\theta_t}\right)^2 \qquad (2)$$

Then, the drive controller 1113-1 selects the lens drive amount from the distance between the mobile objects that perform communication predicted by the attitude-orbit control computer 12-1, that is, the distance of the spatial transmission path, and the information stored in the storage device 1114-1 in such a manner that the condition of the following Expression (3) is satisfied, and performs setting on the drive mechanism 1112-1.

$$G_{fs} \cdot G_t = const. \qquad (3)$$

The reception gain is determined by the aperture diameter of the opposing optical telescope 1108-2. Therefore, by performing the control as described above, the total value of the transmission gain, the free space loss, and the reception gain becomes constant. Thus, the light reception intensities of the capture tracking sensor 1115-2 and the optical demodulator 1111-2 in the spatial optical communication apparatus 1-2 are kept constant.

In the conventional configuration, the OHPA controller needs to perform the gain control of the OHPA according to the distance variation of the spatial transmission path. On the other hand, in the spatial optical communication transceiver 11-1 according to the first embodiment, the OHPA controller 1104-1 does not need to perform the gain control of the OHPA 1103-1 according to the distance variation of the spatial transmission path, and stable operation can be expected in both the signal amplification effect and the applied noise by continuing the operation at the maximum output to the extent not saturated.

In the above description, the control of the transmission light from the spatial optical communication transceiver 11-1 to the spatial optical communication transceiver 11-2 has been described. On the other hand, the control of the transmission light from the spatial optical communication transceiver 11-2 to the spatial optical communication transceiver 11-1 is also similar to the above.

As described above, according to the first embodiment, the spatial optical communication transceiver 11 includes: the light source 1101 to generate a laser beam; the optical modulator 1102 to superimpose a communication signal on the laser beam generated by the light source 1101; the OHPA 1103 to amplify the laser beam superimposed by the optical modulator 1102; the collimator 1105 including the fiber connector 11051 and the collimator lens 11052 to convert the laser beam amplified by the OHPA 1103 into spatial light, and emit transmission light that is the spatial light; the optical telescope 1108 to enlarge a beam width of the transmission light emitted by the collimator 1105 and emit the transmission light to a spatial transmission path; the drive mechanism 1112 capable of adjusting a focal length of the collimator lens 11052; and the drive controller 1113 to determine a drive amount of the drive mechanism 1112 in such a manner that a product of a free space loss calculated from a distance between the spatial optical communication transceiver and a spatial optical communication transceiver 11 as a communication counterpart and a transmission gain determined by a beam spread angle of the transmission light is constant. Thus, the spatial optical communication transceiver 11 according to the first embodiment can cope with the distance variation of the spatial transmission path without performing the electrical gain variating, and the received light intensity received by the reception side can be made constant. Thus, a communicable distance range can be expanded as compared with the related art.

Further, the spatial optical communication transceiver 11 according to the first embodiment can suppress the internal optical system loss on the reception side and improve the line establishment at a long distance as compared with the related art.

Furthermore, the spatial optical communication transceiver 11 according to the first embodiment can prevent fiber damage due to local condensing of high-intensity light, as compared with the related art.

Second Embodiment

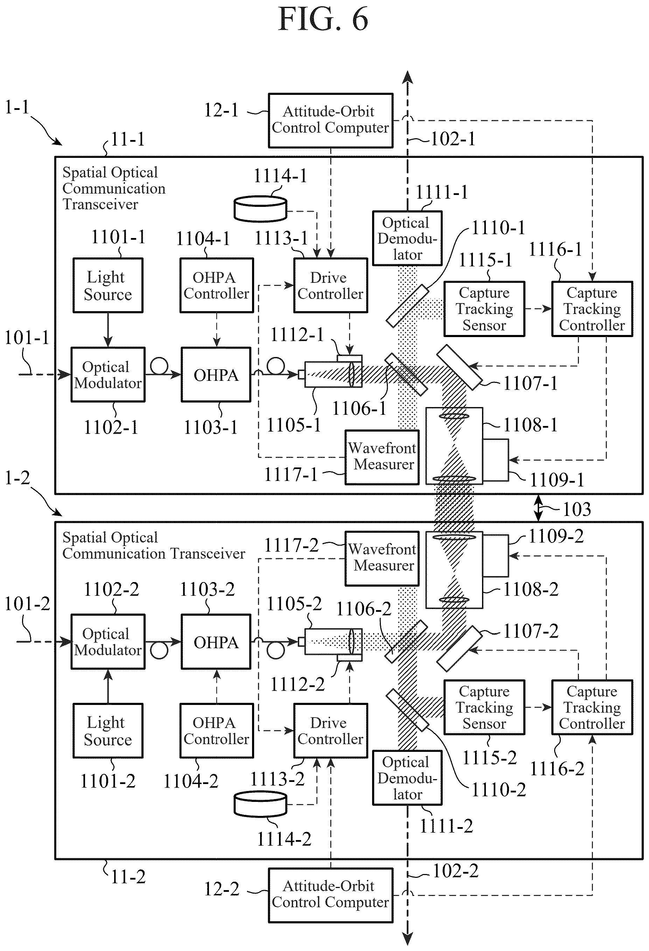

FIG. 6 is a diagram illustrating a configuration example of a spatial optical communication system according to a second embodiment.

In the spatial optical communication system according to the second embodiment illustrated in FIG. 6, as compared with the spatial optical communication system according to the first embodiment illustrated in FIG. 1, a wavefront measurer 1117-1 is added to the spatial optical communication transceiver 11-1, the functions of the dichroic mirror 1106-1, the drive controller 1113-1, and the storage device 1114-1 are changed, a wavefront measurer 1117-2 is added to the spatial optical communication transceiver 11-2, and the functions of the dichroic mirror 1106-2, the drive controller 1113-2, and the storage device 1114-2 are changed. The other configuration examples in the spatial optical communication system according to the second embodiment illustrated in FIG. 6 are similar to the configuration examples in the spatial optical communication system according to the first embodiment illustrated in FIG. 1, and the same reference numerals are given to the other configuration examples, and the description thereof will be omitted.

The dichroic mirror 1106-1 wavelength-separates the transmission light emitted by the collimator 1105-1 and reception light reflected by the tip-tilt mirror 1107-1. Further, the dichroic mirror 1106-1 separates a part of the transmission light emitted by the collimator 1105-1. That is, the dichroic mirror 1106-1 reflects a part of the transmission light emitted by the collimator 1105-1 by Fresnel reflection and transmits the rest, and reflects the reception light reflected by the tip-tilt mirror 1107-1. The transmission light Fresnel reflected by the dichroic mirror 1106-1 is output to the wavefront measurer 1117-1, the transmission light transmitted through the dichroic mirror 1106-1 is output to the tip-tilt mirror 1107-1, and the reception light reflected by the dichroic mirror 1106-1 is output to the beam splitter 1110-1.

The wavefront measurer 1117-1 detects a beam spread angle of transmission light Fresnel-reflected by the dichroic mirror 1106-1. Information indicating the beam spread angle of the transmission light measured by the wavefront measurer 1117-1 is output to the drive controller 1113-1.

Examples of the wavefront measurer 1117-1 include a Shack-Hartmann wavefront sensor. The Shack-Hartmann wavefront sensor divides the wavefront by a lens array, focuses the wavefront on an imager, measures the displacement amount of the spot to thereby measure a wavefront gradient at each point, and combines the results to restore the entire wavefront. For example, the Shack-Hartmann wavefront sensor can estimate the beam spread angle by decomposing the measured wavefront into aberration components by, for example, a Zernike polynomial and analyzing defocus components.

The drive controller 1113-1 performs drive control of the drive mechanism 1112-1 on the basis of the distance between the mobile objects predicted by the attitude-orbit control computer 12-1 and the information stored in the storage device 1114-1. At this time, the drive controller 1113-1 determines the drive amount of the drive mechanism 1112-1 in such a manner that, on the basis of the distance between the mobile objects predicted by the attitude-orbit control computer 12-1, the product of a free space loss calculated from the distance and a transmission gain determined by a beam spread angle of the transmission light becomes constant. Further, when there is an error in the beam spread angle with respect to the target value on the basis of the beam spread angle of the transmission light detected by the wavefront measurer 1117-1, the drive controller 1113-1 corrects the drive amount so as to cancel the error.

The storage device 1114-1 is a setting table that stores information indicating the relationship between the lens drive amount of the drive mechanism 1112-1 and the beam spread angle of transmission light emitted from the optical telescope 1108-1 to the spatial transmission path and the beam spread angle of transmission light emitted by the collimator 1105-1.

The dichroic mirror 1106-2 wavelength-separates the transmission light emitted by the collimator 1105-2 and the reception light reflected by the tip-tilt mirror 1107-2. Further, the dichroic mirror 1106-2 separates a part of the transmission light emitted by the collimator 1105-2. That is, the dichroic mirror 1106-2 reflects a part of the transmission light emitted by the collimator 1105-2 by Fresnel reflection and transmits the rest, and reflects the reception light reflected by the tip-tilt mirror 1107-2. The transmission light Fresnel reflected by the dichroic mirror 1106-2 is output to the wavefront measurer 1117-2, the transmission light transmitted through the dichroic mirror 1106-2 is output to the tip-tilt mirror 1107-2, and the reception light reflected by the dichroic mirror 1106-2 is output to the beam splitter 1110-2.

The wavefront measurer 1117-2 detects a beam spread angle of transmission light Fresnel-reflected by the dichroic mirror 1106-2. Information indicating the beam spread angle of the transmission light measured by the wavefront measurer 1117-2 is output to the drive controller 1113-2.

Examples of the wavefront measurer 1117-2 include a Shack-Hartmann wavefront sensor. The Shack-Hartmann wavefront sensor divides the wavefront by a lens array, focuses the wavefront on an imager, measures the displacement amount of the spot to thereby measure a wavefront gradient at each point, and combines the results to restore the entire wavefront. For example, the Shack-Hartmann wavefront sensor can estimate the beam spread angle by decomposing the measured wavefront into aberration components by, for example, a Zernike polynomial and analyzing defocus components.

The drive controller 1113-2 performs drive control of the drive mechanism 1112-2 on the basis of the distance between the mobile objects predicted by the attitude-orbit control computer 12-2 and the information stored in the storage device 1114-2. At this time, the drive controller 1113-2 determines the drive amount of the drive mechanism 1112-2 in such a manner that the product of a free space loss calculated from the distance and a transmission gain determined by a beam spread angle of the transmission light becomes constant on the basis of the distance between the mobile objects predicted by the attitude-orbit control computer 12-2. Further, when there is an error in the beam spread angle with respect to the target value on the basis of the beam spread angle of the transmission light detected by the wavefront measurer 1117-2, the drive controller 1113-2 corrects the drive amount so as to cancel the error.

The storage device 1114-2 is a setting table that stores information indicating the relationship between the lens drive amount of the drive mechanism 1112-2 and the beam spread angle of the transmission light emitted from the optical telescope 1108-2 to the spatial transmission path and the beam spread angle of the transmission light emitted by the collimator 1105-2.

Here, in a case where the beam spread angle of the transmission light from the optical telescope 1108-1 is controlled by the drive control of the collimator 1105-1, it is necessary to more precisely control the beam spread angle of the transmission light from the collimator 1105-1.

The optical telescope 1108-1 generally increases the opening to increase the transmission gain and the reception gain with respect to the spatial transmission path, and increases the beam width to perform the beam output with respect to the spatial transmission path. Therefore, the optical telescope 1108-1 optically has a lateral magnification equal to or more than one with respect to the spatial transmission path from the inner side of the spatial optical communication transceiver 11-1. That is, from the spatial transmission path, the optical telescope 1108-1 optically has an angular magnification equal to or more than one with respect to the inner side of the spatial optical communication transceiver 11-1. Therefore, with respect to the drive of the drive mechanism 1112-1, the beam spread angle of the transmission light from the optical telescope 1108-1 to the spatial transmission path changes more sharply than the beam spread angle of the transmission light from the collimator 1105-1.

Accordingly, in the spatial optical communication transceiver 11-1 according to the second embodiment, the Fresnel reflected light of the dichroic mirror 1106-1 out of the transmission light from the collimator 1105-1 is made incident on the wavefront measurer 1117-1, and the beam spread angle of the transmission light from the collimator is measured by the wavefront measurer 1117-1.

Then, in the spatial optical communication transceiver 11-1 according to the second embodiment, in order to precisely control the beam spread angle of the transmission light from the collimator 1105-1, information indicating the beam spread angle of the transmission light detected by the wavefront measurer 1117-1 is input to the drive controller 1113-1.

Then, the drive controller 1113-1 sets the lens drive amount in such a manner that the beam spread angle of the transmission light according to the distance of the spatial transmission path is obtained on the basis of Expressions (2) and (3). Thereafter, when there is a divergence between the target value and the actual measurement value of the beam spread angle of the transmission light in the spatial transmission path, the drive controller 1113-1 corrects the lens drive amount so as to cancel the divergence on the basis of the beam spread angle of the transmission light detected by the wavefront measurer 1117-1.

In the above description, the control of the transmission light from the spatial optical communication transceiver 11-1 to the spatial optical communication transceiver 11-2 has been described. On the other hand, the control of the transmission light from the spatial optical communication transceiver 11-2 to the spatial optical communication transceiver 11-1 is also similar to the above.

As described above, according to the second embodiment, the spatial optical communication transceiver 11 includes the wavefront measurer 1117 to detect a beam spread angle of transmission light emitted by the collimator 1105, in which in a case where there is an error in the beam spread angle of the transmission light measured by the wavefront measurer 1117 with respect to the target value, the drive controller 1113 corrects the drive amount of the drive mechanism 1112 so as to cancel the error. Thus, the spatial optical communication transceiver 11 according to the second embodiment can more precisely control the beam spread angle of the transmission light in the spatial transmission path, and can more stabilize the received light intensity received on the reception side, as compared with the spatial optical communication transceiver 11 according to the first embodiment.

Third Embodiment

In spatial optical communication of a mobile object, it is necessary to control beams on the basis of position information of the communication counterpart in such a manner that light can be mutually received. This is called initial capture.

As a method of initial capture, there is a beacon method using beacon light having a beam spread angle and output power larger than those of communication light. For example, Patent Literature 4 discloses a method for facilitating capture by a receiver by changing a spread angle of light according to a distance.

This beacon method can complete initial capturing in a short time, but needs to prepare a light source different from a light source for communication, and needs a different optical antenna for outputting a beacon, and thus this beacon method is disadvantageous in terms of size, weight and power (SWaP).

Patent Literature 4:
JP 2023-143242 A

On the other hand, as another method, there is a beaconless method in which communication light is directly used for initial capture instead of spreading and emitting beacon light having high intensity as described above. In the initial capture by the beaconless method, it is necessary to sweep the communication light throughout the error range of the position information of the communication counterpart. Further, even if the error of the position information is constant, when the relative distance to the communication counterpart is shortened, the angular range in which the beam scanning needs to be performed is widened, and it takes time to perform the beam sweep.

Accordingly, in the spatial optical communication system according to a third embodiment, in order to solve the problem in the initial acquisition between the spatial optical communication apparatuses as described above, a configuration in which the sweep time can be shortened by controlling the beam spread angle will be described.

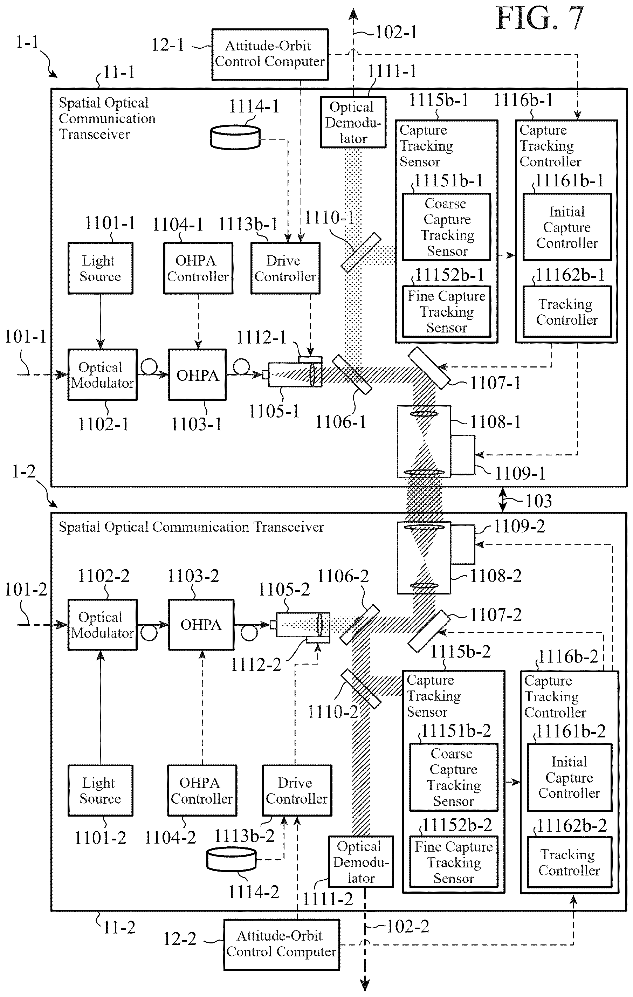

FIG. 7 is a diagram illustrating a configuration example of a spatial optical communication system according to the third embodiment.

In the spatial optical communication system according to the third embodiment illustrated in FIG. 7, as compared with the spatial optical communication system according to the first embodiment illustrated in FIG. 1, the drive controller 1113-1, the capture tracking sensor 1115-1, and the capture tracking controller 1116-1 in the spatial optical communication transceiver 11-1 are changed to a drive controller 1113b-1, a capture tracking sensor 1115b-1, and a capture tracking controller 1116b-1, respectively, and the drive controller 1113-2, the capture tracking sensor 1115-2, and the capture tracking controller 1116-2 in the spatial optical communication transceiver 11-2 are changed to a drive controller 1113b-2, a capture tracking sensor 1115b-2, and a capture tracking controller 1116b-2, respectively. The other configuration examples in the spatial optical communication system according to the third embodiment illustrated in FIG. 7 are similar to the configuration examples in the spatial optical communication system according to the first embodiment illustrated in FIG. 1, and the same reference numerals are given to the other configuration examples, and the description thereof will be omitted.

The drive controller 1113b-1 determines the drive amount of the drive mechanism 1112-1 in such a manner that the beam spread angle of the transmission light changes by $1/L$ or $1/L^2$ in a case where the distance between the mobile objects performing communication is L on the basis of the distance between the mobile objects predicted by the attitude-orbit control computer 12-1 and the information stored in the storage device 1114-1 when establishing the spatial transmission path with the spatial optical communication transceiver 11-2 as a communication counterpart, that is, when performing the initial acquisition.

The drive controller 1113b-1 has a function similar to that of the drive controller 1113-1 described in the first embodiment except for the above function.

As illustrated in FIG. 7, the capture tracking sensor 1115b-1 includes a coarse capture tracking sensor 11151b-1 and a fine capture tracking sensor 11152b-1.

The coarse capture tracking sensor 11151b-1 is a capture tracking sensor having a wider field of view than the fine capture tracking sensor 11152b-1. The coarse capture tracking sensor 11151b-1 detects the arrival angle of the reception light on the basis of the other beam of the reception light obtained by the beam splitter 1110-1.

The fine capture tracking sensor 11152b-1 has a function similar to the function of the capture tracking sensor 1115-1 described in the first embodiment. That is, the fine capture tracking sensor 11152b-1 detects the arrival angle of the reception light on the basis of the other beam of the reception light obtained by the beam splitter 1110-1.

As illustrated in FIG. 7, the capture tracking controller 1116b-1 includes an initial capture controller 11161b-1 and a tracking controller 11162b-1.

The initial capture controller 11161b-1 operates during initial capture.

The initial capture controller 11161b-1 controls the angle of the gimbal 1109-1 on the basis of the position information of the mobile object on which the spatial optical communication apparatus 1-2 is mounted, thereby directing the gimbal 1109-1 to the spatial optical communication transceiver 11-2 as a communication counterpart.

Then, the initial capture controller 11161b-1 controls the tip-tilt mirror 1107-1 to scan the transmission light from the optical telescope 1108-1 in a spiral shape.

Further, the initial capture controller 11161b-1 corrects the angle of the gimbal 1109-1 on the basis of the arrival angle of the reception light detected by the coarse capture tracking sensor 11151b-1.

The tracking controller 11162b-1 operates after the initial capturing is completed. That is, the tracking controller 11162b-1 operates after the arrival angle of the reception light can be detected by the fine capture tracking sensor 11152b-1.

The tracking controller 11162b-1 has a function similar to the function of the capture tracking controller 1116-1 described in the first embodiment. That is, the tracking controller 11162b-1 controls the gimbal 1109-1 and the tip-tilt mirror 1107-1 on the basis of the expected angle predicted by the attitude-orbit control computer 12-1 and the arrival angle of the reception light detected by the fine capture tracking sensor 11152b-1. That is, the tracking controller 11162b-1 controls the angle of the gimbal 1109-1 and the angle of the tip-tilt mirror 1107-1 to align the optical axis of the optical telescope 1108-1 with the optical axis of the optical telescope 1108-2 in the spatial optical communication transceiver 11-2 that communicates with the spatial optical communication transceiver 11-1.

The drive controller 1113b-2 determines the drive amount of the drive mechanism 1112-2 in such a manner that the beam spread angle of the transmission light changes by $1/L$ or $1/L^2$ in a case where the distance between the mobile objects performing communication is L on the basis of the distance between the mobile objects predicted by the attitude-orbit control computer 12-2 and the information stored in the storage device 1114-2 when establishing the spatial transmission path with the spatial optical communication transceiver 11-1 as a communication counterpart, that is, when performing the initial acquisition.

The drive controller 1113b-2 has a function similar to the drive controller 1113-2 described in the first embodiment except for the above function.

As illustrated in FIG. 7, the capture tracking sensor 1115b-2 includes a coarse capture tracking sensor 11151b-2 and a fine capture tracking sensor 11152b-2.

The coarse capture tracking sensor 11151b-2 is a capture tracking sensor having a wider field of view than the fine capture tracking sensor 11152b-2. The coarse capture tracking sensor 11151b-2 detects the arrival angle of the reception light on the basis of the other beam of the reception light obtained by the beam splitter 1110-2.

The fine capture tracking sensor 11152b-2 has a function similar to the function of the capture tracking sensor 1115-2 described in the first embodiment. That is, the fine capture tracking sensor 11152b-2 detects the arrival angle of the reception light on the basis of the other beam of the reception light obtained by the beam splitter 1110-2.

As illustrated in FIG. 7, the capture tracking controller 1116b-2 includes an initial capture controller 11161b-2 and a tracking controller 11162b-2.

The initial capture controller 11161b-2 operates during initial capture.

The initial capture controller 11161b-2 controls the angle of the gimbal 1109-2 on the basis of the position information of the mobile object on which the spatial optical communication apparatus 1-1 is mounted, thereby directing the gimbal 1109-2 to the spatial optical communication transceiver 11-1 as a communication counterpart.

Then, the initial capture controller 11161b-2 controls the tip-tilt mirror 1107-2 to scan the transmission light from the optical telescope 1108-2 in a spiral shape.

Further, the initial capture controller 11161b-2 corrects the angle of the gimbal 1109-2 on the basis of the arrival angle of the reception light detected by the coarse capture tracking sensor 11151b-2.

The tracking controller 11162b-2 operates after the initial capturing is completed. That is, the tracking controller 11162b-2 operates after the arrival angle of the reception light can be detected by the fine capture tracking sensor 11152b-2.

The tracking controller 11162b-2 has a function similar to the function of the capture tracking controller 1116-2 described in the first embodiment. That is, the tracking controller 11162b-2 controls the gimbal 1109-2 and the tip-tilt mirror 1107-2 on the basis of the expected angle predicted by the attitude-orbit control computer 12-2 and the arrival angle of the reception light detected by the fine capture tracking sensor 11152b-2. That is, the tracking controller 11162b-2 controls the angle of the gimbal 1109-2 and the angle of the tip-tilt mirror 1107-2 to align the optical axis of the optical telescope 1108-2 with the optical axis of the optical telescope 1108-1 in the spatial optical communication transceiver 11-1 that communicates with the spatial optical communication transceiver 11-2.

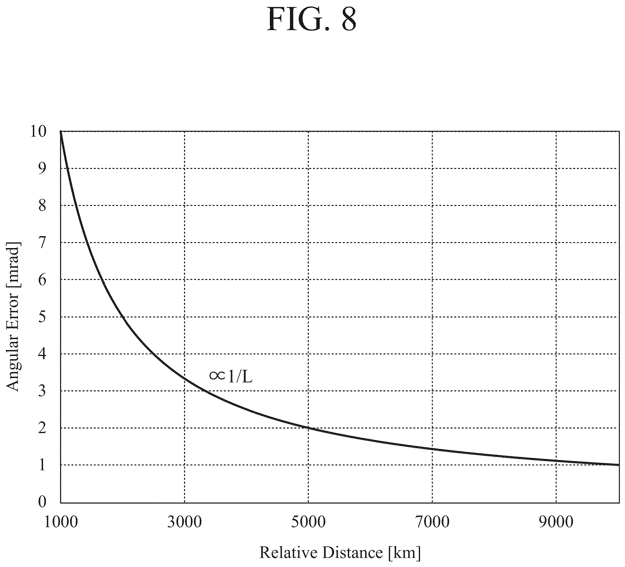

Here, in the initial acquisition for establishing the spatial transmission path between the spatial optical communication transceivers 11-1 and 11-2, assuming that a position estimation error of the counterpart spatial optical communication apparatus 1 is constant, an angular error range ($\theta_{max}$) in which beam scanning is necessary has a relationship as illustrated in FIG. 8 and the following Expression (4) with respect to the relative distance (L). FIG. 8 illustrates a case where the position estimation error of the counterpart spatial optical communication apparatus 1 is 10 km.

$$\theta_{max} \propto \frac{1}{L} \qquad (4)$$

Further, in a case where beam scanning is performed with the beam spread angle ($\theta_t$) of the beam to be scanned constant, the time ($\tau$) taken for beam scanning is proportional to the square of $\theta_{max}$, and thus a relationship as in the following Expression (5) is obtained. That is, the shorter the relative distance, the longer the time taken for beam scanning.

$$\tau \propto \theta_{max}^2 \propto \frac{1}{L^2} \qquad (5)$$

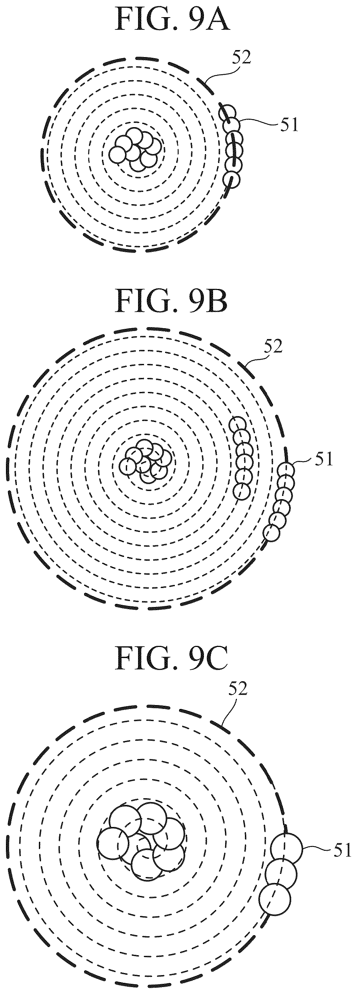

Further, when the sweep speed of the beam is constant and the angular error range is $\theta_{max}$, the time ($\tau$) taken for the beam scan with respect to the beam spread angle ($\theta_t$) has a relationship as illustrated in FIG. 9 and the following Expression (6).

$$\tau \propto \frac{1}{\theta_t} \qquad (6)$$

Here, expanding the beam spread angle ($\theta_t$) on the basis of the following Expression (7) is considered (first case).

$$\theta_t \propto \frac{1}{L} \qquad (7)$$

In this case, if the sweep speed of the beam is constant, the relationship as in the following Expression (8) is obtained by the effect that $\theta_{max}$ varies according to the relative distance and the effect that the beam spread angle ($\theta_t$) varies according to the relative distance. Since the time ($\tau$) taken for beam scanning has originally increased by $1/L^2$ according to the distance variation (L) as illustrated in Expression (5), it can be seen that an effect of shortening the time can be expected.

$$\tau \propto \frac{1}{L} \qquad (8)$$

Next, expanding the beam spread angle ($\theta_t$) on

the basis of the following Expression (9) is considered (second case). In this case, the time ($\tau$) taken for beam scanning can be made constant.

$$\theta_t \propto \frac{1}{L^2} \qquad (9)$$

In FIG. 9, a reference sign 51 indicates transmission light for performing beam scanning. Further, a reference sign 52 indicates an angular error range.

FIG. 9A illustrates a case where the angular error range is 1 mrad, and FIGS. 9B and 9C illustrate a case where the angular error range is 1.5 mrad.

As illustrated in FIG. 9B, in a case where the angular error range is wider than that in the case of FIG. 9A, when scanning is performed using thin transmission light, it takes time to perform beam scanning.

On the other hand, as illustrated in FIG. 9C, when scanning is performed by enlarging the transmission light according to the angular error range, the time taken for beam scanning can be shortened.

Although the time ($\tau$) taken for beam scanning has been described above, making the beam spread angle ($\theta_t$) variable also affects the line feasibility of the spatial optical communication system. Here, it is assumed that there is no change in the loss of the internal optical system and the reception antenna gain of the spatial optical communication apparatus 1, and it is considered that a free space propagation loss and a transmission antenna gain that fluctuate according to the distance change.

The free space propagation loss ($L_{pass}$) between transmission and reception of the spatial optical communication apparatuses 1-1 and 1-2 can be expressed by the following Expression (10) using the wavelength ($\lambda$) and the relative distance ($L$).

$$L_{pass} = \left(\frac{\lambda}{4\pi L}\right)^2 \propto \frac{1}{L^2} \qquad (10)$$

Further, the transmission antenna gain ($G_T$) and the beam spread angle ($\theta_t$) of the optical telescope 1108 have a relationship expressed by the following Expressions (11) and (12).

$$G_T = \frac{4\pi\left(\pi\left(\frac{D_T}{2}\right)^2\right)}{\lambda^2} \propto \frac{1}{\theta_t^2} \qquad (11)$$

$$\theta_t = \frac{1.15*2*\lambda}{\pi\left(\frac{D_T}{2}\right)} \qquad (12)$$

Therefore, in a case where the beam spread angle ($\theta_t$) is constant, when the free space propagation loss and the transmission antenna gain are combined, a relationship as in the following Expression (13) is established.

$$L_{pass}G_T \propto \frac{1}{L^2} \times \frac{1}{\theta_t^2(const.)} \qquad (13)$$

Next, two cases (a first case and a second case) in which the beam spread angle is variable will be considered.

In the case of the first case, since the beam spread angle is changed in the relationship of Expression (7), the following Expression (14) is obtained from Expression (7) and (13), and the reception light intensity detected by the capture tracking sensor 1115b can be made constant.

$$L_{pass}G_T = const. \qquad (14)$$

Further, in the case of the second case, since the beam spread angle is changed in the relationship of Expression (9), the following Expression (15) is obtained from Expressions (9) and (13), and the reception light intensity decreases when the distance is short. Therefore, it is necessary to prevent the reception light intensity in the capture tracking sensor 1115b from being saturated or insufficient in the range in which the line is desired to be established.

$$L_{pass}G_T \propto L^2 \qquad (15)$$

As described above, in both the first case and the second case, the initial capturing time can be reduced as compared with the case where the beam spread angle is not changed. In the case of the first case, the time ($\tau$) taken for beam scanning changes by 1/L, and the reception light intensity detected by the capture tracking sensor 1115b is constant. Further, in the case of the second case, the time ($\tau$) taken for beam scanning becomes constant, and the reception light intensity detected by the capture tracking sensor 1115b changes at $L^2$.

The beam spread angle also contributes to an orientation error loss ($L_p$). The orientation error loss can be expressed as the following Expression (16) with respect to the directional error ($\theta_p$) of the beam. Since the loss tends to decrease by increasing the beam spread angle ($\theta_t$), this does not affect the establishment of the line.

$$L_p = exp\left(-\frac{2\theta_p^2}{\theta_t^2}\right) \qquad (16)$$

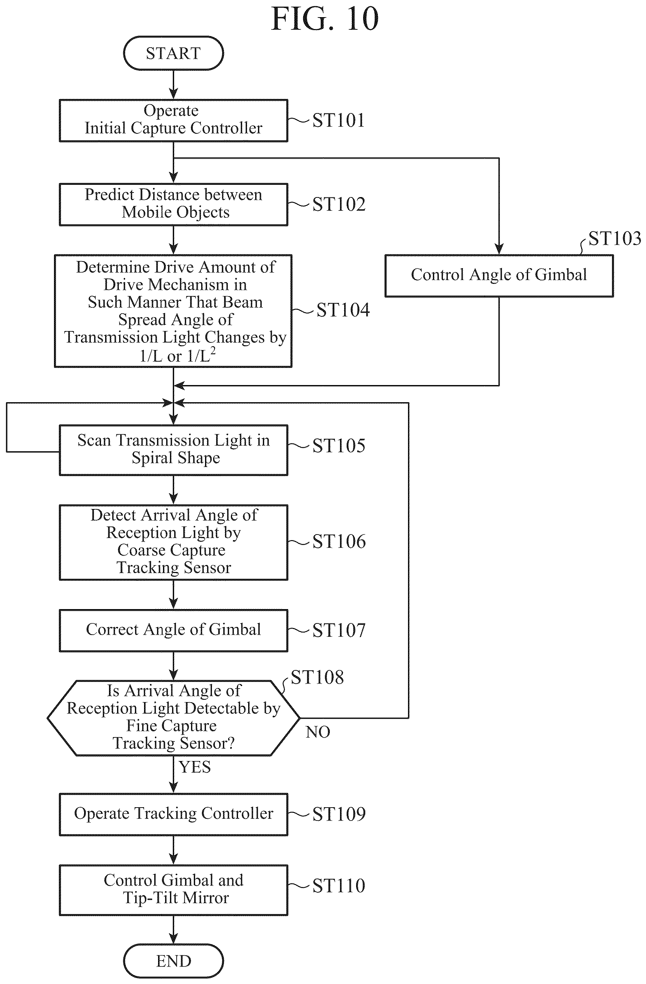

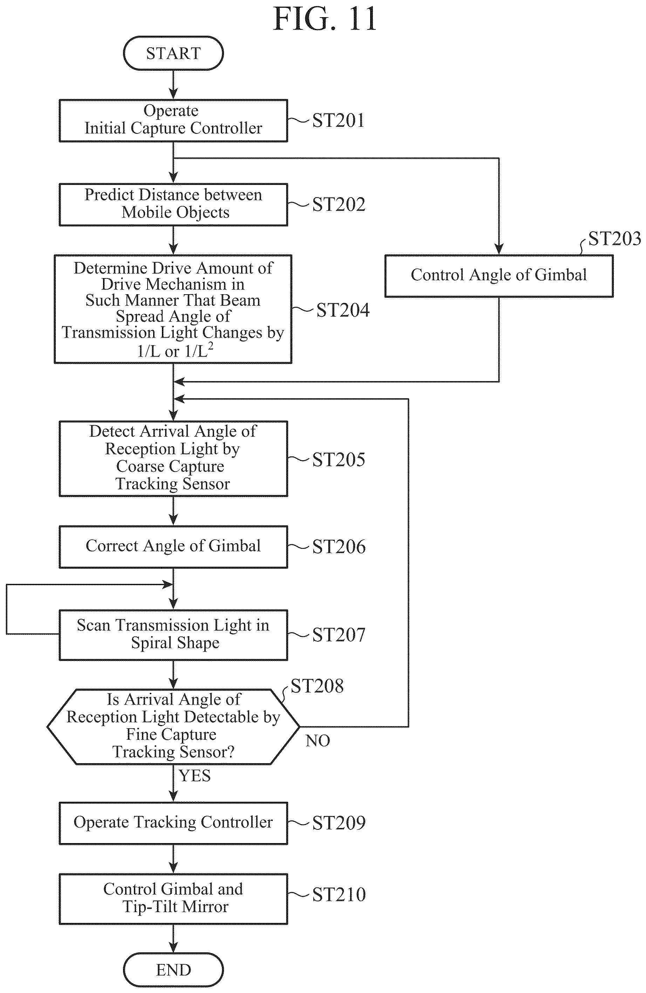

Next, an operation example at the time of initial capture by the spatial optical communication system according to the third embodiment will be described with reference to FIGS. 10 and 11.

First, an operation example at the time of initial capture by the spatial optical communication transceiver 11-1 according to the third embodiment will be described with reference to FIG. 10. Note that the spatial optical communication transceiver 11-1 starts control at the same time as the spatial optical communication transceiver 11-2.

In an operation example at the time of initial capture by the spatial optical communication transceiver 11-1 according to the third embodiment, for example, as illustrated in FIG. 10, first, the capture tracking controller 1116b-1 operates the initial capture controller 11161b-1 (step ST101).

Next, the attitude-orbit control computer 12-1 predicts the distance between the mobile objects that perform communication on the basis of the position information of the mobile object on which the spatial optical communication apparatus 1-1 is mounted and the position information of the mobile object on which the spatial optical communication apparatus 1-2 is mounted (step ST102).

Further, the initial capture controller 11161b-1 controls the angle of the gimbal 1109-1 on the basis of the position information of the mobile object on which the spatial optical communication apparatus 1-2 is mounted, thereby directing the gimbal 1109-1 to the spatial optical communication transceiver 11-2 as a communication counterpart (step ST103). At this time, an angular error based on the position estimation error of the counterpart spatial optical communication transceiver 11-2 occurs. Thus, in this state, a spatial transmission path cannot be established between the spatial optical communication transceivers 11-1 and 11-2. Accordingly, initial capture is performed by performing beam scanning of transmission light.

Next, on the basis of the distance between the mobile objects predicted by the attitude-orbit control computer 12-1 and the information stored in the storage device 1114-1, the drive controller 1113b-1 determines the drive amount of the drive mechanism 1112-1 in such a manner that the beam spread angle of the transmission light changes by $1/L$ or $1/L^2$ when the distance between the mobile objects performing communication is L (step ST104). That is, in performing the beam scan, the beam spread angle of the transmission light from the optical telescope 1108-1 is controlled in such a manner that the condition of the first case or the second case is satisfied.

Next, the initial capture controller 11161b-1 controls the tip-tilt mirror 1107-1 to scan the transmission light from the optical telescope 1108-1 in a spiral shape (step ST105). The above-described scan process is repeated, for example, about four or five times.

That is, by repeating the scan processing a plurality of times, the light reception probability in the coarse capture tracking sensor 11151b-2 included in the spatial optical communication apparatus 1-2 as a communication counterpart is improved, and light reception can be reliably performed.

Next, in a state where the transmission light is spirally scanned in the spatial optical communication apparatus 1-2 as a communication counterpart, the coarse capture tracking sensor 11151b-1 detects the arrival angle of the reception light on the basis of the other beam of the reception light obtained by the beam splitter 1110-1 (step ST106).

Note that the coarse capture tracking sensor 11151b-1 desirably ensures a wide field of view so as to be able to receive transmission light from the spatial optical communication transceiver 11-2 as a communication counterpart even if the angular error is large in the initial capture. Therefore, as the coarse capture tracking sensor 11151b-1, for example, one having a large number of elements such as an image sensor and capable of ensuring a wide field of view is used.

Next, the initial capture controller 11161b-1 corrects the angle of the gimbal 1109-1 on the basis of the arrival angle of the reception light detected by the coarse capture tracking sensor 11151b-1 (step ST107).

Thus, the orientation error of the optical telescope 1108-1 with respect to the spatial optical communication transceiver 11-2 is reduced.

Next, the fine capture tracking sensor 11152b-1 detects the arrival angle of the reception light on the basis of the other beam of the reception light obtained by the beam splitter 1110-1 (step ST108). In step ST108, if the fine capture tracking sensor 11152b-1 cannot detect the arrival angle of the reception light, the sequence returns to step ST105.

On the other hand, in step ST108, when the fine capture tracking sensor 11152b-1 can detect the arrival angle of the reception light, the capture tracking controller 1116b-1 operates the tracking controller 11162b-1 (step ST109).

That is, when the fine capture tracking sensor 11152b-1 can detect the arrival angle of the reception light, it is determined that the initial capturing is completed, and the spatial transmission path is established. Then, the controller operated by the capture tracking controller 1116b-1 is switched from the initial capture controller 11161b-1 to the tracking controller 11162b-1.

Next, the tracking controller 11162b-1 controls the gimbal 1109-1 and the tip-tilt mirror 1107-1 on the basis of the expected angle predicted by the attitude-orbit control computer 12-1 and the arrival angle of the reception light detected by the fine capture tracking sensor 11152b-1 (step ST110). Thereafter, the spatial optical communication transceiver 11-1 continues control to track the spatial optical communication transceiver 11-2.

As described above, the spatial transmission path is continuously established.

Next, an operation example at the time of initial capture by the spatial optical communication transceiver 11-2 according to the third embodiment will be described with reference to FIG. 11. Note that the spatial optical communication transceiver 11-2 starts control at the same time as the spatial optical communication transceiver 11-1.

In an operation example at the time of initial capture by the spatial optical communication transceiver 11-2 according to the third embodiment, for example, as illustrated in FIG. 11, first, the capture tracking controller 1116b-2 operates the initial capture controller 11161b-2 (step ST201).

Next, the attitude-orbit control computer 12-2 predicts the distance between the mobile objects that perform communication on the basis of the position information of the mobile object on which the spatial optical communication apparatus 1-1 is mounted and the position information of the mobile object on which the spatial optical communication apparatus 1-2 is mounted (step ST202).

Further, the initial capture controller 11161b-2 controls the angle of the gimbal 1109-2 on the basis of the position information of the mobile object on which the spatial optical communication apparatus 1-1 is mounted, thereby directing the gimbal 1109-2 to the spatial optical communication transceiver 11-1 as a communication counterpart (step ST203). At this time, an angular error based on the position estimation error of the counterpart spatial optical communication transceiver 11-1 occurs. Thus, in this state, a spatial transmission path cannot be established between the spatial optical communication transceivers 11-1 and 11-2. Accordingly, initial capture is performed by performing beam scanning of transmission light.

Next, on the basis of the distance between the mobile objects predicted by the attitude-orbit control computer 12-2 and the information stored in the storage device 1114-2, the drive controller 1113b-2 determines the drive amount of the drive mechanism 1112-2 in such a manner that the beam spread angle of the transmission light changes by $1/L$ or $1/L^2$ when the distance between the mobile objects performing communication is L (step ST204). That is, in performing the beam scan, the beam spread angle of the transmission light from the optical telescope 1108-2 is controlled in such a manner that the condition of the first case or the second case is satisfied.

Next, in a state where the transmission light is spirally scanned in the spatial optical communication apparatus 1-1 as a communication counterpart, the coarse capture tracking sensor 11151b-2 detects the arrival angle of the reception light on the basis of the other beam of the reception light obtained by the beam splitter 1110-2 (step ST205).

Note that the coarse capture tracking sensor 11151b-2 desirably ensures a wide field of view so as to be able to receive transmission light from the spatial optical communication transceiver 11-1 as a communication counterpart even if the angular error is large in the initial capture. Therefore, as the coarse capture tracking sensor 11151b-2, for example, one having a large number of elements such as an image sensor and capable of ensuring a wide field of view is used.

Next, the initial capture controller 11161b-2 corrects the angle of the gimbal 1109-2 on the basis of the arrival angle of the reception light detected by the coarse capture tracking sensor 11151b-2 (step ST206).

Thus, the orientation error of the optical telescope 1108-2 with respect to the spatial optical communication transceiver 11-1 is reduced.

Next, the initial capture controller 11161b-2 controls the tip-tilt mirror 1107-2 to scan the transmission light from the optical telescope 1108-2 in a spiral shape (step ST207). The above-described scan process is repeated, for example, about four or five times.

That is, by repeating the scan processing a plurality of times, the light reception probability in the coarse capture tracking sensor 11151b-1 included in the spatial optical communication apparatus 1-1 as a communication counterpart is improved, and light reception can be reliably performed.

Note that the spatial optical communication transceiver 11-1 first performs beam scanning in step ST105 illustrated in FIG. 10, in such a manner that the angle formed by the optical axis of the optical telescope 1108-1 and the optical axis of the optical telescope 1108-2 is reduced. Therefore, in general, the scan range in step ST207 illustrated in FIG. 11 can be made smaller than the scan range in step ST105 illustrated in FIG. 10.

Next, the fine capture tracking sensor 11152b-2 detects the arrival angle of the reception light on the basis of the other beam of the reception light obtained by the beam splitter 1110-2 (step ST208). In step ST208, if the fine capture tracking sensor 11152b-2 cannot detect the arrival angle of the reception light, the sequence returns to step ST205.

On the other hand, in step ST208, when the fine capture tracking sensor 11152b-2 can detect the arrival angle of the reception light, the capture tracking controller 1116b-2 operates the tracking controller 11162b-2 (step ST209).

That is, when the fine capture tracking sensor 11152b-2 can detect the arrival angle of the reception light, it is determined that the initial capturing is completed, and the spatial transmission path is established. Then, the controller operated by the capture tracking controller 1116b-2 is switched from the initial capture controller 11161b-2 to the tracking controller 11162b-2.

Next, the tracking controller 11162b-2 controls the gimbal 1109-2 and the tip-tilt mirror 1107-2 on the basis of the expected angle predicted by the attitude-orbit control computer 12-2 and the arrival angle of the reception light detected by the fine capture tracking sensor 11152b-2 (step ST210). Thereafter, the spatial optical communication transceiver 11-2 continues control to track the spatial optical communication transceiver 11-1.

As described above, the spatial transmission path is continuously established.

Note that, in the above description, a case where the spatial optical communication transceiver 11-1 first performs beam scanning has been described, but the spatial optical communication transceiver 11-2 may first perform beam scanning.

Furthermore, in the above description, a case where the drive controller 1113, the capture tracking sensor 1115, and the capture tracking controller 1116 are changed to the drive controller 1113b, the capture tracking sensor 1115b, and the capture tracking controller 1116b respectively, has been described with respect to the spatial optical communication system according to the first embodiment illustrated in FIG. 1. However, it is not limited thereto, and the drive controller 1113, the capture tracking sensor 1115, and the capture tracking controller 1116 may be changed to the drive controller 1113b, the capture tracking sensor 1115b, and the capture tracking controller 1116b, respectively, in the spatial optical communication system according to the second embodiment illustrated in FIG. 6, and effects similar to those described above can be obtained.

As described above, according to the third embodiment, the drive controller 1113b determines the drive amount of the drive mechanism 1112 in such a manner that a beam spread angle of transmission light changes by 1/L in a case where a distance between the spatial optical communication transceiver and the spatial optical communication transceiver 11 as a communication counterpart is L when establishing a spatial transmission path with the spatial optical communication transceiver 11 as a communication counterpart, and the capture tracking controller 1116b performs spiral scanning of the transmission light by controlling the tip-tilt mirror 1107 when establishing a spatial transmission path with the spatial optical communication transceiver 11 as a communication counterpart.

Furthermore, according to the third embodiment, the drive controller 1113b determines the drive amount of the drive mechanism 1112 in such a manner that a beam spread angle of transmission light changes by $1/L^2$ in a case where a distance between the spatial optical communication transceiver and the spatial optical communication transceiver 11 as a communication counterpart is L when establishing a spatial transmission path with the spatial optical communication transceiver 11 as a communication counterpart, and the capture tracking controller 1116b performs spiral scanning of the transmission light by controlling the tip-tilt mirror 1107 when establishing a spatial transmission path with the spatial optical communication transceiver 11 as a communication counterpart.

Thus, the spatial optical communication transceiver 11 according to the third embodiment can shorten the initial capture time of the spatial optical communication apparatus 1 as a communication counterpart by controlling the beam spread angle as compared with the spatial optical communication transceivers 11 according to the first and second embodiments.

That is, in the spatial optical communication system according to the third embodiment, the spread angle of the output light of the collimator 1105 is adjusted by varying the distance between the collimator lens 11052 of the collimator 1105 that outputs the output light of the OHPA 1103 to the space at the time of initial capturing and the fiber connector 11051. Then, in the spatial optical communication system according to the third embodiment, the spread angle is changed according to the distance between the mobile objects, and is swept throughout the angular error range. Thus, in the spatial optical communication system according to the third embodiment, the sweep time in the initial capture can be shortened.

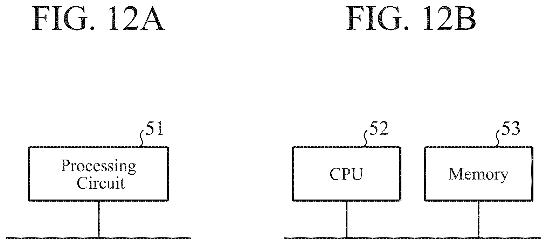

Finally, a hardware configuration example of the spatial optical communication transceiver 11 according to the first to third embodiments will be described with reference to FIG. 12. Hereinafter, a hardware configuration example of the spatial optical communication transceiver 11 according to the first embodiment will be described, but the same applies to the hardware configuration examples of the spatial optical communication transceiver 11 according to the second and third embodiments.

The functions of the OHPA controller 1104-1, the drive controller 1113-1, and the capture tracking controller 1116-1 in the spatial optical communication transceiver 11 are implemented by a processing circuit 51. The processing circuit 51 may be dedicated hardware as illustrated in FIG. 12A, or may be a central processing unit (CPU, which may also be referred to as a central processing device, a processing device, an arithmetic device, a microprocessor, a microcomputer, a processor, or a digital signa processor (DSP)) 52 that executes a program stored in a memory 53 as illustrated in FIG. 12B.

In a case where the processing circuit 51 is dedicated hardware, the processing circuit 51 corresponds to, for example, a single circuit, a composite circuit, a programmed processor, a parallel programmed processor, an application specific integrated circuit (ASIC), a field-programmable gate array (FPGA), or a combination thereof. The functions of the respective units of the OHPA controller 1104-1, the drive controller 1113-1, and the capture tracking controller 1116-1 may be implemented by the processing circuit 51, or the functions of the respective units may be collectively implemented by the processing circuit 51.

When the processing circuit 51 is the CPU 52, the functions of the OHPA controller 1104-1, the drive controller 1113-1, and the capture tracking controller 1116-1 are implemented by software, firmware, or a combination of software and firmware. The software and the firmware are described as programs and stored in the memory 53. The processing circuit 51 implements the function of the respective units by reading and executing the program stored in the memory 53. That is, the spatial optical communication transceiver 11 includes the memory 53 for storing a program that results in execution of processing of each configuration when executed by the processing circuit 51. It can also be said that these programs cause a computer to execute procedures and methods performed by the OHPA controller 1104-1, the drive controller 1113-1, and the capture tracking controller 1116-1. Here, the memory 53 corresponds to, for example, a nonvolatile or volatile semiconductor memory such as RAM, ROM, a flash memory, EPROM, or EEPROM, a magnetic disk, a flexible disk, an optical disk, a compact disk, a mini disk, or DVD.

Note that a part of the functions of the OHPA controller 1104-1, the drive controller 1113-1, and the capture tracking controller 1116-1 may be implemented by dedicated hardware, and a part thereof may be implemented by software or firmware. For example, the functions of the OHPA controller 1104-1 can be implemented by the processing circuit 51 as dedicated hardware, and the functions of the drive controller 1113-1 and the capture tracking controller 1116-1 can be implemented by the processing circuit 51 reading and executing a program stored in the memory 53.

As described above, the processing circuit 51 can implement the above-described functions by hardware, software, firmware, or a combination thereof.

Note that free combinations of the individual embodiments, modifications of any components of the individual embodiments, or omissions of any components in the individual embodiments are possible.

INDUSTRIAL APPLICABILITY

The spatial optical communication transceiver according to the present disclosure can cope with a distance variation of a spatial transmission path without performing electrical gain variation, and is suitable for use in a spatial optical communication transceiver or the like that is mounted on a mobile object and transmits data.

REFERENCE SIGNS LIST

1-1, 1-2: spatial optical communication apparatus, 11-1, 11-2: spatial optical communication transceiver, 12-1, 12-2: attitude-orbit control computer, 51: processing circuit, 52: CPU, 53: memory, 1101-1, 1101-2: light source, 1102-1, 1102-2: optical modulator, 1103-1, 1103-2: OHPA, 1104-1, 1104-2: OHPA controller, 1105-1, 1105-2: collimator, 1106-1, 1106-2: dichroic mirror, 1107-1, 1107-2: tip-tilt mirror, 1108-1, 1108-2: optical telescope, 1109-1, 1109-2: gimbal, 1110-1, 1110-2: beam splitter, 1111-1, 1111-2: optical demodulator, 1112-1, 1112-2: drive mechanism, 1113-1, 1113b-1, 1113-2, 1113b-2: drive controller, 1114-1, 1114-2: storage device, 1115-1, 1115b-1, 1115-2, 1115b-2: capture tracking sensor, 1116-1, 1116b-1, 1116-2, 1116b-2: capture tracking controller, 1117-1, 1117-2: wavefront measurer, 11051-1, 11051-2: fiber connector, 11052-1, 11052-2: collimator lens, 11053-1: linear motion actuator, 11054-1: piezoelectric element, 11081-1: collimator side lens, 11082-1: spatial transmission path side lens, 11151b-1, 11151b-2: coarse capture tracking sensor, 11152b-1, 11152b-2: fine capture tracking sensor, 11161b-1, 11161b-2: initial capture controller, 11162b-1, 11162b-2: tracking controller

## Claims

1. A spatial optical communication transceiver comprising:

   a light source to generate a laser beam;
   an optical modulator to superimpose a communication signal on the laser beam generated by the light source;
   an optical amplifier to amplify the laser beam superimposed by the optical modulator;
   a collimator including a fiber connector and a collimator lens to convert the laser beam amplified by the optical amplifier into spatial light, and emit transmission light that is the spatial light;
   an optical telescope to enlarge a beam width of the transmission light emitted by the collimator and emit the transmission light to a spatial transmission path;
   a drive mechanism capable of adjusting a focal length of the collimator lens; and
   a drive controller to determine a drive amount of the drive mechanism in such a manner that a product of a free space loss calculated from a distance between the spatial optical communication transceiver and a spatial optical communication transceiver as a communication counterpart and a transmission gain determined by a beam spread angle of the transmission light is constant.

2. The spatial optical communication transceiver according to claim 1, further comprising:

   a piezoelectric element capable of moving an end of the fiber connector along an optical axis, wherein
   the drive mechanism adjusts a focal length of the collimator lens by driving the piezoelectric element.

3. The spatial optical communication transceiver according to claim 1, wherein

   the collimator lens is a lens whose focal length changes when a voltage is applied, and
   the drive mechanism adjusts the focal length of the collimator lens by applying a voltage to the collimator lens.

4. The spatial optical communication transceiver according to claim 1, further comprising:

   a wavefront measurer to detect a beam spread angle of the transmission light emitted by the collimator, wherein

in a case where there is an error in the beam spread angle of the transmission light measured by the wavefront measurer with respect to a target value, the drive controller corrects a drive amount of the drive mechanism so as to cancel the error.

5. The spatial optical communication transceiver according to claim 1 or 4, further comprising:

a gimbal capable of adjusting an optical axis direction of the optical telescope;

a tip-tilt mirror capable of adjusting an angle in biaxial directions of the transmission light emitted by the collimator;

an optical demodulator to demodulate a communication signal from reception light received by the optical telescope;

a capture tracking sensor to detect an arrival angle of the reception light received by the optical telescope; and

a capture tracking controller to control the gimbal and the tip-tilt mirror on a basis of an expected angle that is a relative direction of the spatial optical communication transceiver as a communication counterpart with respect to the spatial optical communication transceiver and the arrival angle detected by the capture tracking sensor to align optical axes of the optical telescope and an optical telescope included in the spatial optical communication transceiver as a communication counterpart.

6. The spatial optical communication transceiver according to claim 5, wherein

the drive controller determines a drive amount of the drive mechanism in such a manner that a beam spread angle of transmission light changes by 1/L in a case where a distance between the spatial optical communication transceiver and the spatial optical communication transceiver as a communication counterpart is L when establishing a spatial transmission path with the spatial optical communication transceiver as a communication counterpart, and

the capture tracking controller performs spiral scanning of transmission light by controlling the tip-tilt mirror when establishing a spatial transmission path with the spatial optical communication transceiver as a communication counterpart.

7. The spatial optical communication transceiver according to claim 5, wherein

the drive controller determines a drive amount of the drive mechanism in such a manner that a beam spread angle of transmission light changes by $1/L^2$ in a case where a distance between the spatial optical communication transceiver and the spatial optical communication transceiver as a communication counterpart is L when establishing a spatial transmission path with the spatial optical communication transceiver as a communication counterpart, and

the capture tracking controller performs spiral scanning of transmission light by controlling the tip-tilt mirror when establishing a spatial transmission path with the spatial optical communication transceiver as a communication counterpart.

# FIG. 1

# FIG. 2A

1105-1  11052-1  11081-1  1108-1  11082-1

f1-1  f2-1  f3-1

# FIG. 2B

11052-1  1105-1  11081-1  1108-1  f2-1  11082-1

f3-1

f1'-1

# FIG. 3

1105-1

11053-1

11051-1

11052-1

Drive Control
Signal

# FIG. 4

1105-1

11054-1

11051-1

11052-1

Drive Control
Signal

# FIG. 5

1105-1

11051-1

11052-1

Drive Control
Signal

# FIG. 6

# FIG. 7

FIG. 8

# FIG. 9A

# FIG. 9B

# FIG. 9C

# FIG. 10

START

Operate
Initial Capture Controller — ST101

Predict Distance between
Mobile Objects — ST102

Control Angle of Gimbal — ST103

Determine Drive Amount of
Drive Mechanism in
Such Manner That Beam
Spread Angle of
Transmission Light Changes by
$1/L$ or $1/L^2$ — ST104

Scan Transmission Light in
Spiral Shape — ST105

Detect Arrival Angle of
Reception Light by
Coarse Capture
Tracking Sensor — ST106

Correct Angle of Gimbal — ST107

Is Arrival Angle of
Reception Light Detectable by
Fine Capture
Tracking Sensor? — ST108

NO

YES

Operate Tracking Controller — ST109

Control Gimbal and
Tip-Tilt Mirror — ST110

END

# FIG. 11

START

Operate
Initial Capture Controller — ST201

Predict Distance between
Mobile Objects — ST202

Control Angle of Gimbal — ST203

Determine Drive Amount of
Drive Mechanism in
Such Manner That Beam
Spread Angle of
Transmission Light Changes by
$1/L$ or $1/L^2$ — ST204

Detect Arrival Angle of
Reception Light by
Coarse Capture
Tracking Sensor — ST205

Correct Angle of Gimbal — ST206

Scan Transmission Light in
Spiral Shape — ST207

Is Arrival Angle of
Reception Light Detectable by
Fine Capture
Tracking Sensor? — ST208

NO

YES

Operate Tracking Controller — ST209

Control Gimbal and
Tip-Tilt Mirror — ST210

END

FIG. 12A

FIG. 12B

51

Processing
Circuit

52

CPU

53

Memory

## INTERNATIONAL SEARCH REPORT

| | International application No. |
|---|---|
| | **PCT/JP2024/010142** |

**A. CLASSIFICATION OF SUBJECT MATTER**

*H04B 10/112*(2013.01)i
FI: H04B10/112

According to International Patent Classification (IPC) or to both national classification and IPC

**B. FIELDS SEARCHED**

Minimum documentation searched (classification system followed by classification symbols)

H04B10/112

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/026207 A1 (MITSUBISHI ELECTRIC CORPORATION) 07 February 2019 (2019-02-07)<br>paragraphs [0009]-[0019], [0038]-[0046], fig. 1, 7 | 1-7 |
| A | WO 2019/207756 A1 (MITSUBISHI ELECTRIC CORPORATION) 31 October 2019 (2019-10-31)<br>paragraphs [0011]-[0018], fig. 1 | 1-7 |
| A | WO 2022/038678 A1 (NIPPON TELEGRAPH AND TELEPHONE CORPORATION) 24 February 2022 (2022-02-24)<br>paragraphs [0011]-[0014], fig. 2 | 1-7 |
| A | JP 8-149077 A (CANON KK) 07 June 1996 (1996-06-07)<br>paragraph [0020], fig. 1 | 1-7 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/010142**

| Patent document cited in search report | | | Publication date (day/month/year) | Patent family member(s) | Publication date (day/month/year) |
|---|---|---|---|---|---|
| WO | 2019/026207 | A1 | 07 February 2019 | (Family: none) | |
| WO | 2019/207756 | A1 | 31 October 2019 | US 2021/0013966 A1 paragraphs [0024]-[0034], fig. 1 EP 3761528 A1 | |
| WO | 2022/038678 | A1 | 24 February 2022 | (Family: none) | |
| JP | 8-149077 | A | 07 June 1996 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005195806 A
- JP 2002221675 A
- JP H06037719 A
- JP 2023143242 A